# EUROPÄISCHE PATENTSCHRIFT

(11) **EP 2 477 162 B1**
(45) Veröffentlichungstag und Bekanntmachung des Hinweises auf die Patenterteilung: **11.12.2013**
(21) Anmeldenummer: 12001251.3
(22) Anmeldetag: 19.12.2007
(51) Int. Cl.: G07D 7/08, G01N 29/11, G01N 29/34

(54) **Ultraschallsensor zur Untersuchung eines Wertdokuments**
Ultrasound sensor for examining a valuable document
Capteur d'ultrasons destiné à l'analyse d'un document de valeur

(30) Priorität: 22.12.2006 DE 102006061337
(43) Veröffentlichungstag der Anmeldung: 18.07.2012
(62) Teilanmeldung aus: 07856931.6
(73) Patentinhaber: Giesecke & Devrient GmbH, 81677 München (DE)
(72) Erfinder: Domke, Jan, 85591 Vaterstetten (DE); Lohner, Joseph, 81549 München (DE); Moosler, Hans-Uwe, 81929 München (DE)

(56) Entgegenhaltungen:
- DE-A1- 19 921 217
- GB-A- 615 684
- JP-A- 4 315 910

## Beschreibung

Die vorliegende Erfindung betrifft eine Vorrichtung zur Abgabe und/ oder zum Empfang von Ultraschall, insbesondere zur Untersuchung eines Wertdokuments und einen Ultraschallsensor zur Untersuchung eines Wertdokuments.

Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandensein ein Indiz für die Echtheit, d.h. die Herstellung durch eine dazu befugten Stelle, ist. Wichtige Beispiele für solche Wertdokumente sind Chipkarten, Coupons, Gutscheine, Schecks und insbesondere Banknoten.

Solche Wertdokumente sollen in vielen Fällen auf ihre Echtheit und/ oder ihren physischen Zustand, beispielsweise die Lappigkeit oder das Vorhandensein von Rissen, Löchern oder Klebestreifen, maschinell untersucht werden.

Zu einer solchen Prüfung kann in bekannten Vorrichtungen zur Bearbeitung von Wertdokumenten insbesondere Ultraschall verwendet werden. Die entsprechende Vorrichtung verfügt dann über einen Ultraschallsensor, der insbesondere eine Vorrichtung zur Abgabe und/ oder zum Empfang von Ultraschall umfassen kann (siehe z.B. DE 199 21 217 A1). Bei solchen Untersuchungen kann entweder Ultraschall kontinuierlich oder gepulst auf ein Wertdokument abgegeben und der von dem Wertdokument zurückgeworfene Ultraschall oder vorzugsweise der durch das Wertdokument hindurchgelangte Ultraschall erfaßt werden; die entsprechenden Erfassungssignale werden dann ausgewertet.

Ein solcher Ultraschallsensor kann auch in Wertdokumentbearbeitungsvorrichtungen, bei denen Stapel von Wertdokumenten vereinzelt werden, zur Ermittlung von Vereinzelungsfehlern, insbesondere dem im wesentlichen gleichzeitigen Abzug von zwei wenigstens teilweise aufeinanderliegenden Wertdokumenten, auch als Doppel- bzw. Mehrfachabzug bezeichnet, verwendet werden.

Verläuft die Hauptausbreitungsrichtung bzw. die mittlere Ausbreitungsrichtung des Ultraschalls wenigstens näherungsweise orthogonal zu der Oberfläche des Wertdokuments kann jedoch der unerwünschte Effekt auftreten, daß das Wertdokument den Ultraschall in Richtung eines in dem Ultraschallsensor verwendeten Ultraschallwandlers zurückwirft. Bei Verwendung von kontinuierlich abgegebenem Ultraschall können dadurch und gegebenenfalls durch Reflexion an dem Ultraschallsensor stehende Wellen auftreten, die die Untersuchung verfälschen. Wird der Ultraschall nur in Form von Pulsen abgegeben, kann ein Puls als sogenanntes Pulsecho reflektiert werden und ebenfalls die Untersuchung beeinträchtigen.

Der vorliegenden Erfindung liegt daher die Aufgabe zugrunde, eine Vorrichtung zur Abgabe und/ oder zum Empfang von Ultraschall, insbesondere zur Untersuchung eines Wertdokuments, bzw. einen Ultraschallsensor zur Untersuchung eines Wertdokuments zu schaffen, die eine Untersuchung von Wertdokumenten erlauben, bei der Beeinträchtigungen durch unerwünschte Reflektionen des verwendeten Ultraschalls gering gehalten werden.

Die Aufgabe wird nach einer ersten Alternative gelöst durch eine Vorrichtung zur Abgabe und/oder zum Empfang von Ultraschall wenigstens einer vorgegebenen Frequenz mit wenigstens einem Ultraschallwandler zur Wandlung von Ultraschall wenigstens der vorgegebenen Frequenz in elektrische Signale und/ oder zur Umwandlung von elektrischen Signalen in Ultraschall wenigstens der vorgegebenen Frequenz und einem Halter, in dem wenigstens ein Ultraschallkanal ausgebildet ist, in dem der Ultraschallwandler wenigstens teilweise angeordnet ist und/ oder durch den Ultraschall von bzw. zu dem Ultraschallwandler gelangen kann, wobei der Halter wenigstens eine an wenigstens einen Abschnitt des Ultraschallkanals angrenzende, nicht-fasrige Oberflächenschicht aufweist, deren Impedanz kleiner ist als die einer zu der Oberflächenschicht benachbarten, insbesondere an diese angrenzenden, Innenschicht des Halters.

Die erfindungsgemäße Vorrichtung dient zur Abgabe und/ oder zum Empfang von Ultraschall wenigstens einer Frequenz, die vorgegeben ist. Vorzugsweise, insbesondere für den Betrieb mit kurzen Ultraschallpulsen, kann die Vorrichtung auch zur Ultraschallwandlung in einem vorgegebenen Frequenzbereich ausgebildet sein, der die vorgegebene Frequenz enthält. Für Pulsbetrieb kann sich die Breite des Frequenzbereichs unter anderem nach der gewünschten Pulsdauer richten. Die vorgegebenen Frequenz bzw. der Frequenzbereich liegt für Anwendungen im Bereich der Bearbeitung und/ oder Prüfung von Wertdokumenten vorzugsweise innerhalb des Frequenzbereichs von 100 kHz bis 1 MHz, besonders bevorzugt zwischen 100 kHz und 600 kHz. Für Anwendungen im Bereich der Bearbeitung und/ oder Prüfung von Wertdokumenten mittels Ultraschallpulsen kann die Breite des Frequenzbereichs beispielsweise kleiner als 70 kHz gewählt werden. Zur Wandlung von elektrischen Signalen in Ultraschall mit der vorgegebenen Frequenz und/ oder zur Wandlung von Ultraschall mit der vorgegebenen Frequenz in elektrische Signale dient der Ultraschallwandler, der entsprechend der vorgegebenen Frequenz bzw. dem vorgegebenen Frequenzbereich ausgebildet bzw. gewählt ist. Hierbei können beliebige, insbesondere bekannte Ultraschallwandler, beispielsweise Wandler mit entlang des Umfangs kreiszylindrischer, den Ultraschall abstrahlender Oberfläche gewählt werden. Der Ultraschallwandler kann an seiner ultraschallabstrahlenden Oberfläche insbesondere eine speziell zur Einkopplung von Ultraschall in Luft eine mit einem Aktor, beispielsweise einem piezoelektrischen Element, verbundene Schicht aufweisen.

Der Ultraschallwandler kann wenigstens teilweise in dem Ultraschallkanal des Halters angeordnet, d. h. ganz oder teilweise in dem Halter versenkt sein. Der Ultraschallkanal ist dann so gestaltet, daß der Ultraschallwandler mit den dafür vorgesehenen Abschnitten zur Wandlung von Ultraschall hinreichend frei schwingen kann. Es ist jedoch auch möglich, daß der Ultraschallwandler in einer Aufnahme in dem Halter an einem Ende des Ultraschallkanals angeordnet ist, das dem Ende des Ultraschallkanals gegenüberliegt, durch das Ultraschall aus dem Halter oder in den Halter gelangen kann.

Der Ultraschallkanal kann dabei insbesondere auch einen Einfluß auf die räumliche Abstrahl- bzw. Empfangscharakteristik der Vorrichtung für Ultraschall in dem vorgegebenen Frequenzbereich ausüben und entsprechend gestaltet sein.

Weiter kann der Ultraschallwandler mit seiner Abstrahlrichtung prinzipiell beliebig relativ zu dem Halter angeordnet sein. Vorzugsweise ist bei einem Halter mit einer ebenen, bei einer Untersuchung dem Wertdokument zugewandeten Oberfläche, der Ultraschallwandler und vorzugsweise der Ultraschallkanal, so ausgerichtet, daß die Abstrahlrichtung mit einer Normalen auf die Oberfläche einem Winkel zwischen 0° und 5°, besonders bevorzugt zwischen 0° und 1° ausgerichtet.

In der Regel wird bei Beschallung eines Gegenstands durch einen so angeordneten Ultraschallwandler einer konventionellen Vorrichtung wenigstens ein Teil des Ultraschalls auf den Ultraschallwandler zurückgeworfen, was bei kontinuierlichem Betrieb zu stehenden Wellen und bei Pulsbetrieb zu Mehrfachechos führt.

Überraschenderweise wurde nun gefunden, daß die Ausbildung stehender Wellen bzw. die Bildung starker Mehrfachechos dadurch wesentlich reduziert werden kann, daß der Halter die wenigstens eine an wenigstens einem Abschnitt des Ultraschallkanals angrenzende oder diesen wenigstens teilweise begrenzende, nicht-fasrige Oberflächenschicht aufweist, deren Impedanz kleiner ist als die einer zu der Oberflächenschicht benachbarten, insbesondere an diese angrenzenden, Innenschicht des Halters. Unter einer nicht-fasrige Oberflächenschicht wird dabei eine Schicht aus einem nicht in Form von Fasern vorliegenden Stoff verstanden, insbesondere ein Festkörpermaterial einschließlich von elastischen Materialien oder Schäumen. Fasrige Oberflächenschicht sind dagegen textile Flächengebilde wie beispielsweise sogenannte "nonwovens", zum Beispiel Filze oder Vliese, oder Gewebe, Gestricke usw..

Die Oberflächenschicht kann dabei insbesondere in radialer Richtung des Ultraschallkanals an die Innenschicht angrenzen oder in einer Richtung parallel zu der Richtung des Ultraschallkanals bzw. der Schallausbreitungsrichtung in dem Ultraschallkanal.

Diese Gestaltung des Halters hat den Vorteil, daß nicht-fasrige Materialien sehr einfach und genau bearbeitet werden können, während die Bildung von Abschnitten eines Ultraschallkanals in einem fasrigen Material insbesondere bei kleinen Durchmessern nur ungenau möglich ist.

Unter dem Begriff der Impedanz wird allgemein im Rahmen der vorliegenden Erfindung die akustische Impedanz verstanden. Prinzipiell genügt es, daß die Impedanz der Oberflächenschicht kleiner als die der Innenschicht ist. Vorzugsweise liegt die Impedanz des Materials der Oberflächenschicht im Bereich zwischen 20% und 75% der Impedanz des Materials der Innenschicht. In diesem Fall wird eine besonders gute Unterdrückung von stehenden Wellen bzw. Mehrfachreflexionen erreicht.

Unter der Dichte oder der Impedanz des Materials der Oberflächenschicht wird im Fall von inhomogenen Oberflächenschichten der Mittelwert entlang einer Normalen auf die Oberfläche der Oberflächenschicht durch die Oberflächenschicht verstanden.

Die Oberflächenschicht braucht prinzipiell nicht die gesamte, den Ultraschallkanal begrenzende Oberfläche zu bilden. Vorzugsweise erstreckt sich die Oberflächenschicht jedoch bis zu einem dem Ultraschallwandler abgewandten Ende des Ultraschallkanals. Mit anderen Worten erstreckt sie sich bis der Oberfläche des Halters in Abstrahl- bzw. aus Eintrittsrichtung. Auf diese Weise kann auch die Reflexion von auf den Halter unmittelbar neben dem Ultraschallkanal auftreffendem Ultraschall reduziert werden.

In einer Ebene quer zu der Abstrahlrichtung kann es ebenfalls ausreichen, daß nur ein Sektor der den Ultraschallkanal begrenzenden Oberfläche durch die Oberflächenschicht gebildet wird. Dies kann insbesondere dann wünschenswert sein, wenn sich die Abstrahl- bzw. Empfangscharakteristik für bestimmte Raumrichtungen unterscheiden soll. Es ist jedoch bevorzugt, daß die Oberflächenschicht den Abschnitt des Ultraschallkanals wenigstens ringartig umschließt. Hierdurch kann eine bessere und in einer Ebene quer zur Richtung des abgestrahlten oder empfangenen Ultraschalls gesehen weniger gerichtete Abschwächung von stehenden Wellen oder Mehrfachreflexionen erzielt werden. Darüber hinaus kann sich die Fertigung vereinfachen.

Prinzipiell kann der Halter aus einem Stück gebildet sein, wobei die Oberflächenschicht durch eine Änderung der Zusammensetzung des Materials des Halters gebildet wird. Beispielsweise kann der Halter eine Schichtstruktur aufweisen. Gemäß einer ersten Variante kann der Halter jedoch auch einen Grundkörper mit einer Aufnahme und einem in der Aufnahme wenigstens teilweise angeordneten hülsenförmigen Abschnitt oder einer in der Aufnahme wenigstens teilweise angeordneten Hülse, der bzw. die die Oberflächenschicht umfaßt und in dem bzw. der der Ultraschallwandler wenigstens teilweise angeordnet ist, umfassen. Dieser Abschnitt oder die Hülse, in dem bzw. der der Abschnitt des Ultraschallkanals verläuft, kann dabei mit dem Grundkörper in der Aufnahme kraft- und/oder form- und/oder stoffschlüssig verbunden sein, beispielsweise also durch Reibung bzw. Klemmung und/oder durch stoffschlüssige Verbindung mittels eines Materials zur Herstellung einer Klebeverbindung.

Die Hülse oder der hülsenförmige Abschnitt eines geeigneten Körpers können beispielsweise durch Bearbeitung eines Rohlings oder durch Verwendung einer entsprechend Form bei Herstellung aus flüssigen oder pastösen Materialen erhalten werden.

Alternativ ist es möglich, daß der Halter durch einen Grundkörper aus dem Material der Oberflächenschicht gebildet ist, wobei um die Oberflächenschicht bzw. den Aufnahmebereich in einer Richtung quer zu Abstrahlrichtung bzw. Empfangsrichtung herum Material der höheren Impedanz angeordnet ist.

Prinzipiell können als Material für die Oberflächenschicht beliebige Materialien eingesetzt werden, die eine entsprechende Impedanz aufweisen. Vorzugsweise ist jedoch die Oberflächenschicht aus einem Material gebildet, dessen mittlere Dichte wenigstens 10% kleiner ist als die mittlere Dichte des Materials der Innenschicht. Unter der mittleren Dichte wird dabei bei homogenen Materialien die normale Dichte und bei inhomogenen Materialien die Dichte von Bereichen, die sehr viel größer sind als die wesentlichen Dimensionen der Strukturinhomogenitäten, bei Matrixverbundwerkstoffen beispielsweise der in die Matrix eingelagerten Bereiche, verstanden. Dies hat den Vorteil, daß zur Beeinflussung der Impedanz eines Materials dessen Dichte einfacher beeinflußt werden kann als die Schallgeschwindigkeit.

Prinzipiell kann die Dichte der Oberflächenschicht beliebig gewählt werden, solange die Impedanz der Oberflächenschicht kleiner als die der Innenschicht ist. Es wurde gefunden, daß die Dichte des Materials der Oberflächenschicht vorzugsweise zwischen 0,3 g/cm³ und 0,8 g/cm³ liegt. Dabei ergibt sich eine besonders effektive Reduktion von stehenden Wellen bzw. Mehrfachreflexion, wenn die Dichte der Oberflächenschicht einen Wert zwischen 0,4 g/cm³ und 0,7 g/cm³ annimmt.

Die Dichte der Innenschicht ist zwar auch prinzipiell beliebig, liegt aber vorzugsweise im Bereich zwischen 0,8 g/cm³ bis 1.8 g/cm³.

Prinzipiell kann als Material der Oberflächenschicht ein homogenes Material verwendet werden. Vorzugsweise umfaßt die Oberflächenschicht jedoch einen Verbundwerkstoff mit einem Gewichtsanteil an der Oberflächenschicht von mehr als 80%. Besonders bevorzugt besteht die Oberflächenschicht im wesentlichen, d.h. zu mehr als 95 Gew.-% aus dem Verbundmaterial.

Bei dem Verbundwerkstoff kann es sich prinzipiell um beliebige isotrope oder anisotrope Verbundstoffe handeln, Vorzugsweise wird ein Verbundstoff verwendet, bei dem in eine Matrix Körper bzw. Bereich eingelagert sind, die nicht die Beschaffenheit der Matrix aufweisen. Besonders bevorzugt wird ein Verbundmaterial mit einer Matrix und darin ungeordnete verteilten Körpern, an denen eine Streuung und/ oder Absorption von Ultraschall wenigstens der vorgegebenen Frequenz erfolgen kann, verwendet. Hierdurch kann das Auftreten stehender Wellen bzw. die Stärke von Mehrfachreflexionen weiter reduziert werden.

Es wurde gefunden, daß überraschenderweise eine besonders gute Reduktion von stehenden Wellen oder Mehrfachreflexionen erzielt wird, wenn das Material der Oberflächenschicht einen syntaktischen Schaum umfaßt und vorzugsweise aus diesem besteht. Unter einem syntaktischen Schaum, häufig auch als "syntactic foam" bezeichnet, wird dabei insbesondere ein Material verstanden, das ein Matrixmaterial mit darin eingelagerten Hohlkörpern, vorzugsweise Hohlkugeln, umfaßt. Der syntaktische Schaum ist dabei vorzugsweise wenigstens teilweise für den Ultraschall der vorgegebenen Frequenz durchlässig, so daß ein wenigstens kleiner Anteil durch die Oberflächenschicht auf die Innenschicht gelangen kann. Diese Art von Verbundwerkstoffen kann den Vorteil aufweisen, daß teilweise eine Streuung des Ultraschalls an den Hohlkörpern stattfinden kann, was dessen Ausbreitung beeinträchtigt.

Insbesondere für die Anwendung im Bereich der Prüfung von Wertdokumenten kann der syntaktische Schaum Hohlkörper, insbesondere Hohlkugeln, mit einem Durchmesser zwischen 5 µm und 200 µm enthalten. Daneben kann der syntaktische Schaum noch Hohlkörper anderen Durchmessers aufweisen, deren Anteil an der Anzahl der Hohlkörper bezogen auf das Volumen des Schaums dann jedoch vorzugsweise kleiner als 20 % ist. Besonders bevorzugt kann der Bereich, in dem die die Durchmesser der Hohlkörper liegen, der Bereich zwischen 5 µm und 120 µm sein. Unter dem Durchmesser eines der Hohlkörper wird dabei insbesondere der Durchmesser der kleinsten Kugel verstanden, die den Hohlkörper umschließt, bei Hohlkugeln also insbesondere deren normaler Durchmesser. Die Hohlkörper können in diesem Bereich bezüglich ihrer Durchmesser monodispers oder gleichmäßig verteilt sein oder, vorzugsweise, eine bi- oder multimodale Verteilung aufweisen. Die Verwendung einer bi- oder multimodalen Verteilung kann den Vorteil bieten, daß bei der bevorzugten Verwendung von Hohlkugeln als Hohlkörper eine wesentlich höhere Packungsdichte der Hohlkugeln erreicht werden kann, was zu reduzierter Dichte und damit Impedanz und gegebenenfalls zu erhöhter Streuung führt.

Die Hohlkugeln können grundsätzlich aus einem beliebigen Material gefertigt sein. Vorzugsweise enthält der syntaktische Schaum Glashohlkugeln, vorzugsweise solche, deren Durchmesser zwischen 5 µm und 200 µm liegt. Die Verwendung von Glashohlkugeln hat den Vorteil, daß diese, verglichen mit anderen Materialien, einfach erhältlich sind.

Als Matrixmaterial des syntaktischen Schaums können prinzipiell beliebige Materialien verwendet werden, in die die Hohlkörper einlagerbar sind. Vorzugsweise enthält der syntaktische Schaum als Matrixmaterial ein Polymermaterial, besonders bevorzugt ein Harz. Je nach Anforderung können dabei beispielsweise Epoxid-Harze oder Polyurethan-Harze verwendet werden.

Die Dicke der Oberflächenschicht kann beispielsweise in Abhängigkeit von der vorgegebenen Frequenz und der Impedanz der Innenschicht gewählt sein. Insbesondere kann die Oberflächenschicht eine Dicke größer als ein Viertel der der vorgegebenen Frequenz entsprechenden Wellenlänge in der Oberflächenschicht und kleiner als 10 mm aufweisen.

Die erfindungsgemäße Vorrichtung braucht nicht nur einen einzelnen Ultraschallwandler zu besitzen. Vielmehr ist es bevorzugt, daß die Vorrichtung wenigstens einen weiteren Ultraschallwandler aufweist, und bei der der Halter wenigstens einen weiterer Ultraschallkanal besitzt, in dem der weitere Ultraschallwandler wenigstens teilweise angeordnet ist, wobei der Halter wenigstens eine an wenigstens einen weiteren Abschnitt des weiteren Ultraschallkanals angrenzende, weitere nicht-fasrige Oberflächenschicht aufweist, deren Impedanz kleiner ist als die einer an die weitere Oberflächenschicht angrenzende weitere Innenschicht des Halters.

Die weitere Oberflächenschicht kann vorzugsweise nach wenigstens einer der zuvor geschilderten Ausführungsformen ausgebildet sein.

Die dann wenigstens zwei Ultraschallwandler, die entsprechenden Ultraschallkanäle, und die entsprechenden Oberflächen- sowie Innenschichten brauchen dabei nicht unbedingt die gleichen Eigenschaften und den gleichen Aufbau aufzuweisen, jedoch ist dies vorzugsweise der Fall.

Insbesondere in diesem Fall ist es bevorzugt, daß die Oberflächenschichten für wenigstens zwei der Ultraschallkanäle bzw. Ultraschallwandler durch Abschnitte eines einzelnen Formteils gebildet werden. Diese Ausführungsform bietet gleich mehrere Vorteile. So kann beispielsweise eine nachträgliche Bestückung einer Grundkörpers für den Halter mit Oberflächenschichten, die durch hülsenförmige Abschnitte des Formkörpers gebildet werden, in nur einem Arbeitsschritt erfolgen.

Für eine einfache Herstellung kann es sich als besonders günstig erweisen, wenn der Halter wenigstens zwei Schichten aufweist, von denen eine durch das Formteil gebildet ist, in dem die entsprechenden Abschnitte der Ultraschallkanäle ausgebildet sein können.

Darüber hinaus kann bei Verwendung syntaktischer Schäume auf der Basis von Polymermatrixmaterialien ein solches Formteil häufig besonders einfach hergestellt werden, ohne daß eine mechanische Bearbeitung notwendig wäre.

Die Vorrichtung kann vorzugsweise zur Untersuchung von Wertdokumenten mit Ultraschall eingesetzt werden. Die Aufgabe wird daher nach der ersten Alternative weiter gelöst durch einen Ultraschallsensor zur Untersuchung von Wertdokumenten mit wenigstens einer erfindungsgemäßen Vorrichtung.

Insbesondere ist es, beispielsweise zur Erfassung von Doppel- oder Mehrfachabzügen von Wertdokumenten durch einen Vereinzler oder zur Prüfung von Wertdokumenten, bei dem Ultraschallsensor bevorzugt, daß dieser zur Untersuchung von Wertdokumenten mittels durch diese hindurchtretenden Ultraschalls vorgesehen ist, daß dieser wenigstens eine weitere erfindungsgemäße Vorrichtung aufweist, und daß die Vorrichtungen so relativ zueinander angeordnet sind, daß deren Halter einen, vorzugsweise spaltförmigen, Erfassungsbereich bilden, durch den ein Wertdokument transportierbar ist und die Ultraschallwandler der Vorrichtungen wenigstens eine Ultraschallstrecke bilden, wenn einer von diesen als Sender und der andere als Empfänger betrieben wird. Solche Ultraschallsensoren erlauben Untersuchungen in Transmission, die gleichzeitig sehr robust und aussagekräftig sind.

Bei solchen Ultraschallsensoren können in vorteilhafter Weise die Ausbildung stehender Wellen oder das Auftreten bzw. die Wirkung von Mehrfachreflexionen weiter dadurch reduziert werden, daß bei dem Ultraschallsensor der Halter der Vorrichtung bzw. wenigstens einer der Vorrichtungen an der dem Erfassungsbereich bzw. dem Wertdokument bei einer Untersuchung zugewandten Oberfläche wenigstens eine nicht-fasrige Oberflächenschicht aufweist, deren Impedanz kleiner ist als die einer an die Oberflächenschicht angrenzenden Innenschicht des Halters. Die an den Erfassungsbereich, in dem sich ein Wertdokument bei einer Untersuchung befindet bzw. durch diesen hindurch transportiert wird, angrenzende Oberflächenschicht kann insbesondere entsprechend einer oder mehrerer der oben genannten Ausführungsformen der Oberflächenschicht an den Ultraschallkanälen ausgebildet sein. Weiter kann sie in vorteilhafter Weise als Formteil ausgebildet sein, das gleichzeitig die hülsenförmigen Abschnitte aufweist.

Die Aufgabe wird nach einer zweiten Alternative auch gelöst durch einen Ultraschallsensor zur Prüfung eines Wertdokuments in einem Erfassungsbereich des Ultraschallsensors mittels Ultraschall wenigstens einer vorgegebenen Frequenz mit einem als Sender für den Ultraschall fungierenden ersten Ultraschallwandler und einem als Empfänger für den Ultraschall fungierenden zweiten Ultraschallwandler, wobei die Ultraschallwandler so angeordnet sind, daß sie eine durch den Erfassungsbereich verlaufende Ultraschallstrecke bilden, und wobei wenigstens einer der Ultraschallwandler einen relativ zu der Ultraschallstrecke geneigten Oberflächenabschnitt zur Abstrahlung von Ultraschall und/oder zum Empfang von Ultraschall aufweist.

Der Ultraschallsensor nach der zweiten Alternative der Erfindung verfügt also über die zwei Ultraschallwandler, von denen einer zur Abgabe von Ultraschall wenigstens der vorgegebenen Frequenz und der andere zum Empfang von Ultraschall wenigstens der vorgegebenen Frequenz ausgebildet sind. Die Ultraschallwandler können ansonsten gleich oder unterschiedlich ausgebildet sein.

Durch die Neigung des Oberflächenabschnitts relativ zu der Ultraschallstrecke, insbesondere einer Verbindungslinie zwischen den schwingenden, den Ultraschall abgebenden oder empfangenden Oberflächen der Ultraschallwandler, wird Ultraschall ebenfalls gegen die Richtung der Ultraschallstrecke geneigt abgegeben bzw. empfangen. Da auch für eine Reflexion des Ultraschalls an einem Wertdokument gilt, daß der Einfallswinkel in etwa der Ausfallswinkel ist, werden reflektierte Anteile des von dem Oberflächenabschnitt abgegebenen Ultraschalls aus dem Bereich der Ultraschallstrecke reflektiert, so daß stehende Wellen nicht oder wenigstens nicht in dem Ausmaß entstehen, bzw. reflektierte Pulse, insbesondere auch mehrfach reflektierte Pulse, nicht oder nur mit sehr geringer Stärke wieder auf einen der Ultraschallwandler der Ultraschallstrecke treffen. Weiter werden auf die Ultraschallwandler treffende Anteil des Ultraschalls durch den geneigten Oberflächenbereich aus dem unmittelbaren Bereich der Ultraschallstrecke heraufreflektiert.

Gegenüber einer Lösung, bei der die Ultraschallstrecke gegenüber der Oberfläche des Wertdokuments geneigt ist, um die Auswirkung von Reflexionen zu reduzieren, ergibt sich ein reduzierter Bauraum des Ultraschallsensors.

Obwohl es prinzipiell genügen kann, daß der Oberflächenabschnitt eben ist, ist vorzugsweise der Oberflächenabschnitt des wenigstens einen Ultraschallwandlers rotationssymmetrisch um die Richtung der Ultraschallstrecke ausgebildet. Es kann dann entweder ein Schallfeld ähnlich einem Schallkegel ausgestrahlt werden, so daß bei Reflexion an beispielsweise einem Wertdokument die gegen die Richtung der Ultraschallstrecke stärker geneigten Schallanteile durch Reflexion aus der Ultraschallstrecke herausgelenkt werden und die Ultraschallwandler daher nicht mehr beeinflussen können, oder es können auf die Ultraschallwandler auftreffende Anteile nach außen von der Ultraschallstrecke weg reflektiert werden.

Der Oberflächenabschnitt kann insbesondere kegelförmig oder kegelstumpfförmig ausgebildet sein. Diese Ausführungsform hat den Vorteil, daß dieser Oberflächenabschnitt besonders einfach hergestellt werden kann und sich gleichzeitig eine sehr gute Wirkung ergibt.

Um noch eine gute Bündelung des abgegebenen Ultraschalls bzw. ein nicht zu weite winkelabhängige Empfangscharakteristik zu erhalten, liegt der Kegelöffnungswinkel des Oberflächenabschnitts vorzugsweise zwischen 160° und 176°.

Um einen guten Sende- bzw. Empfangswirkungsgrad zu erhalten, weist der Oberflächenabschnitt vorzugsweise einen maximalen Außendurchmesser auf, der zwischen der der Frequenz entsprechenden Wellenlänge in Luft und dem Zehnfachen der Wellenlänge in Luft liegt. Dabei kann von Luft bei Normalbedingungen nach DIN oder bei einer Temperatur von 20°C bei einem Druck von 1 bar und einer relativen Luftfeuchtigkeit von 75% ausgegangen werden.

Ein besonders geringer Bauraum ergibt sich, wenn der Ultraschallsensor wenigstens ein Transportelement zur Führung des Wertdokuments in dem Erfassungsbereich aufweist, und wenn die Ultraschallwandler so angeordnet sind, daß die Ultraschallstrecke mit einer Normalen auf die Oberfläche des Wertdokuments einen Winkel kleiner als 5° bildet. Bei dem Transportelement kann es sich beispielsweise um Riemen oder Rollen oder ähnliche Transportelemente handeln, die Lage des Wertdokuments relativ zu dem Ultraschallsensor bestimmen.

Wie bereits erwähnt, braucht nur einer der Ultraschallwandler einen geneigten Oberflächenabschnitt aufzuweisen. Eine besonders gute Funktion wird jedoch erhalten, wenn auch der andere Ultraschallwandler entsprechend einer Ausführungsform oder einer Kombination wenigstens zweier der zuvor im Zusammenhang mit der zweiten Alternative genannten Ausführungsformen ausgebildet ist.

Bei solchen Ultraschallsensoren können in vorteilhafter Weise die Ausbildung stehender Wellen oder das Auftreten bzw. die Wirkung von Mehrfachreflexionen weiter dadurch reduziert werden, daß im Bereich des Ultraschallkanals, durch den Ultraschall von dem Ultraschallwandler abgestrahlt oder empfangen wird, eine ultraschalldämpfende Schicht, beispielsweise aus einem fasrigen Material, insbesondere Filz, vorgesehen wird. Es kann jedoch auch alternativ oder zusätzlich bei dem Ultraschallsensor wenigstens ein den Erfassungsbereich begrenzendes Element vorgesehen sein, das eine nicht-fasrige Oberflächenschicht aufweist, deren Impedanz kleiner ist als die einer an die Oberflächenschicht angrenzenden Innenschicht des Elements. Das Element kann insbesondere als Halter für den jeweiligen Ultraschallsensor ausgebildet sein. Die an den Erfassungsbereich angrenzende Oberflächenschicht kann weiter entsprechend einer oder mehrerer der oben genannten Ausführungsformen der Oberflächenschicht in den Ultraschallkanälen ausgebildet sein. So liegt vorzugsweise die Impedanz des Materials der Oberflächenschicht im Bereich zwischen 20% und 75% der Impedanz des Materials der Innenschicht. In diesem Fall wird eine besonders gute Unterdrückung von stehenden Wellen bzw. Mehrfachreflexionen erreicht.

Darüber hinaus kann sie in vorteilhafter Weise als Formteil ausgebildet sein, das gleichzeitig die hülsenförmigen Abschnitte aufweist.

Diese Ausführungsform hat den Vorteil, daß Ultraschall, der auf die den Erfassungsbereich begrenzende Oberfläche trifft, ebenfalls nicht oder nur stark geschwächt reflektiert wird, was die Ausbildung stehender Wellen oder das Auftreten starker Mehrfachreflexionen stark begrenzt.

Die Aufgabe wird nach einer dritten Alternative gelöst durch einen Ultraschallsensor zur Prüfung eines Wertdokuments in einem Erfassungsbereich des Ultraschallsensors mittels Ultraschall einer vorgegebenen Frequenz mit einem als Sender für den Ultraschall fungierenden Ultraschallwandler, einem als Empfänger für den Ultraschall fungierenden Ultraschallwandler, und wenigstens einem Halter für die Ultraschallwandler, bei dem der wenigstens eine Halter den Erfassungsbereich wenigstens teilweise begrenzt und wenigstens ein den Erfassungsbereich begrenzender Abschnitt des wenigstens einen Halters in der Umgebung des in oder an dem Halter angeordneten Ultraschallwandlers eine nicht-fasrige Oberflächenschicht aufweist, deren Impedanz kleiner ist als die einer an die Oberflächenschicht angrenzenden Innenschicht des Halters.

Insbesondere kann der Ultraschallsensor je einen Halter für die Ultraschallwandler aufweisen, die den Erfassungsbereich wenigstens teilweise begrenzen, wobei wenigstens ein den Erfassungsbereich begrenzender Abschnitt der Halter in der Umgebung des in oder an dem Halter angeordneten Ultraschallwandlers eine nicht-fasrige Oberflächenschicht aufweist, deren Impedanz kleiner ist als die einer an die Oberflächenschicht angrenzenden Innenschicht des Halters.

Für die Eigenschaften und Merkmale der Oberflächenschicht sind die in Bezug auf die Oberflächenschicht bei der ersten Alternative beschriebenen Ausführungsformen ebenso vorteilhaft anwendbar.

So können prinzipiell als Material für die Oberflächenschicht beliebige Materialien eingesetzt werden, die eine entsprechende Impedanz aufweisen. Vorzugsweise ist die Oberflächenschicht aus einem Material gebildet, dessen mittlere Dichte wenigstens 10% kleiner ist als die mittlere Dichte des Materials der Innenschicht. Unter der mittleren Dichte wird dabei bei homogenen Materialien die normale Dichte und bei inhomogenen Materialien die Dichte von Bereichen, die sehr viel größer sind als die wesentlichen Dimensionen der Strukturinhomogenitäten, bei Matrixverbundwerkstoffen beispielsweise die in die Matrix eingelagerten Bereiche, verstanden. Dies hat den Vorteil, daß die Dichte eines Materials einfacher beeinflußt werden kann, als die Schallgeschwindigkeit.

Prinzipiell kann die Dichte der Oberflächenschicht beliebig gewählt werden, solange die Impedanz der Oberflächenschicht kleiner als die der Innenschicht ist. Es wurde gefunden, daß die Dichte des Materials der Oberflächenschicht vorzugsweise zwischen 0,3 g/cm³ und 0,8 g/cm³ liegt. Dabei ergibt sich eine besonders effektive Reduktion von stehenden Wellen bzw. Mehrfachreflexion, wenn die Dichte der Oberflächenschicht einen Wert zwischen 0,4 g/cm³ und 0,7 g/cm³ annimmt.

Die Dichte der Innenschicht ist zwar auch prinzipiell beliebig, liegt aber vorzugsweise im Bereich zwischen 0,8 g/cm³ bis 1.8 g/cm³.

Prinzipiell kann als Material der Oberflächenschicht ein homogenes Material verwendet werden. Vorzugsweise umfaßt die Oberflächenschicht jedoch einen Verbundwerkstoff mit einem Gewichtsanteil an der Oberflächenschicht von mehr als 80%. Besonders bevorzugt besteht die Oberflächenschicht im wesentlichen, d.h. zu mehr als 95 Gew.-% aus dem Verbundmaterial.

Bei dem Verbundwerkstoff kann es sich prinzipiell um beliebige isotrope oder anisotrope Verbundstoffe handeln, Vorzugsweise wird ein Verbundstoff verwendet, bei dem in eine Matrix Körper bzw. Bereich eingelagert sind, die nicht die Beschaffenheit der Matrix aufweisen.

Es wurde gefunden, daß überraschenderweise eine besonders gute Reduktion von stehenden Wellen oder Mehrfachreflexionen erzielt wird, wenn das Material der Oberflächenschicht einen syntaktischen Schaum umfaßt, vorzugsweise aus diesem besteht. Unter einem syntaktischen Schaum, häufig auch als "syntactic foam bezeichnet", wird dabei insbesondere ein Material verstanden, das ein Matrixmaterial mit darin eingelagerten Hohlkörpern, vorzugsweise Hohlkugeln, umfaßt. Der syntaktische Schaum ist dabei vorzugsweise wenigstens teilweise für den Ultraschall der vorgegebenen Frequenz durchlässig, so daß ein wenigstens kleiner Anteil durch die Oberflächenschicht auf die Innenschicht gelangen kann. Diese Art von Verbundwerkstoffen hat den Vorteil, daß teilweise eine Streuung des Ultraschalls an den Hohlkörpern stattfinden kann, was dessen Ausbreitung beeinträchtigt.

Insbesondere für die Anwendung im Bereich der Prüfung von Wertdokumenten kann der syntaktische Schaum Hohlkörper, insbesondere Hohlkugeln, mit einem Durchmesser zwischen 5 µm und 200 µm enthalten. Dabei kann der syntaktische Schaum noch Hohlkörper anderen Durchmessers enthalten, deren Anteil an der Anzahl der Hohlkörper bezogen auf das Volumen des Schaums ist dann jedoch vorzugsweise kleiner als 20%. Besonders bevorzugt kann der Bereich, in dem die die Durchmesser der Hohlkörper liegen, der Bereich zwischen 5 µm und 120 µm sein. Unter dem Durchmesser eines der Hohlkörper wird dabei insbesondere der Durchmesser der kleinsten Kugel verstanden, die den Hohlkörper umschließt, bei Hohlkugeln also insbesondere deren normaler Durchmesser. Die Hohlkörper können in diesem Bereich bezüglich ihrer Durchmesser monodispers verteilt sein oder eine bi- oder multimodale Verteilung aufweisen. Die Verwendung einer bioder multimodalen Verteilung kann den Vorteil bieten, daß bei der bevorzugten Verwendung von Hohlkugeln als Hohlkörper eine wesentlich höhere Packungsdichte der Hohlkugeln erreicht wird.

Die Hohlkugeln können grundsätzlich aus einem beliebigen Material gefertigt sein. Vorzugsweise enthält der syntaktische Schaum Glashohlkugeln, vorzugsweise solche, deren Durchmesser zwischen 5 µm und 200 µm liegt. Die Verwendung von Glashohlkugeln hat den Vorteil, daß diese, verglichen mit anderen Materialien einfach erhältlich sind.

Als Matrixmaterial des syntaktischen Schaums können prinzipiell beliebige Materialien verwendet werden, in die die Hohlkörper einlagerbar sind. Vorzugsweise enthält der syntaktische Schaum jedoch als Matrixmaterial ein Polymermaterial, besonders bevorzugt ein Harz. Je nach Anforderung können dabei beispielsweise Epoxid-Harze oder Polyurethan-Harze verwendet werden.

Die Dicke der Oberflächenschicht kann beispielsweise in Abhängigkeit von dem vorgegebenen Wellenlängenbereich und der Impedanz der Innenschicht gewählt sein. Insbesondere kann die Oberflächenschicht eine Dicke größer als ein Viertel der der vorgegebenen Frequenz entsprechenden Wellenlänge in der Oberflächenschicht und kleiner als 10 mm aufweisen.

Weiter kann der Ultraschallsensor wenigstens eines oder eine Kombination von wenigstens zweien der Merkmale des Ultraschallsensors nach der ersten Alternative aufweisen. Insbesondere kann bei dem Ultraschallsensor wenigstens in einem der Halter wenigstens ein Ultraschallkanal ausgebildet sein, in dem der jeweilige Ultraschallwandler wenigstens teilweise angeordnet ist und/ oder durch den Ultraschall von bzw. zu dem Ultraschallwandler gelangen kann, wobei der Halter wenigstens eine an wenigstens einen Abschnitt des Ultraschallkanals angrenzende, nicht-fasrige Oberflächenschicht aufweist, deren Impedanz kleiner ist als die einer zu der Oberflächenschicht benachbarten Innenschicht des Halters. Vorzugsweise sind dabei das Material der an den Ultraschallkanal angrenzenden Oberflächenschicht und der den Erfassungsbereich begrenzenden Oberflächenschicht gleich ausgebildet, obwohl dies nicht unbedingt der Fall zu sein braucht.

Alle genannten Alternativen bieten den Vorteil, daß durch die starke Schwächung bzw. Unterdrückung von von dem Wertdokument reflektierten Pulsen zwei Messungen in kürzerem zeitlichem Abstand ausgeführt werden können. Typischerweise muß nämlich nach der Abgabe eines zur Messung gedachten Ultraschallpulses abgewartet werden, bis alle Echos des Pulses, d.h. ein- oder mehrfach reflektierten Teil des Pulses hinreichend weit abgeklungen sind, damit diese nicht die Detektion des transmittierten Meßpulses für die nächste Messung beeinträchtigen. Treten weniger oder schwächere Pulsechos auf, kann der nächste Meßpuls daher schneller abgegeben werden.

Ist die Abschwächung eines reflektierten Pulses sehr stark, kann auch die Länge der Ultraschallstrecke reduziert werden, was ebenfalls die für die Messung benötigte, durch die Pulslaufzeit bestimmte Zeit und den Bauraum für den jeweiligen Ultraschallsensor reduziert.

Die Aufgabe kann weiterhin gelöst werden durch ein Ultraschallsensor zur Prüfung eines Wertdokuments in einem Erfassungsbereich des Ultraschallsensors mittels Ultraschall einer vorgegebenen Frequenz mit einem als Sender für den Ultraschall fungierenden Ultraschallwandler und einem als Empfänger für den Ultraschall fungierenden Ultraschallwandler, je einem Halterabschnitt für den Sender und den Empfänger, die jeweils miteinander fluchtende Ultraschallkanäle aufweisen, in denen der Sender bzw. der Empfänger vollständig versenkt so angeordnet sind, daß sie eine durch den Erfassungsbereich verlaufende Ultraschallstrecke bilden, und wobei die Ultraschallwandler gegenüber einer Fluchtachse der Ultraschallkanäle geneigt angeordnet sind.

Durch die geneigte Anordnung der Ultraschallwandler wird ein ähnlicher Effekt erzielt wie bei dem Ultraschallsensor der zweiten Alternative, wobei hier jedoch Ultraschallwandler verwendet werden können, die ebene, nicht geneigte Oberflächen aufweisen, beispielsweise Standard-Ultraschallwandler.

Die zuvor beschriebenen Ausführungsformen für die Auskleidung des Ultraschallkanals oder die Oberfläche eines Halters sind auch hier vorteilhaft anwendbar, da die zur Seite auswandernden Echos dann bei jeder Reflexion stark in Intensität verlieren.

Besonders bevorzugt weisen auch hier die Oberflächen der Ultraschallkanäle und die Oberfläche der Halterabschnitte ein fasriges schalldämpfendes oder schalldämmendes Material oder vorzugsweise ein nicht-fasriges Material wie zuvor beschrieben auf.

Die erfindungsgemäßen Sensoren können besonders vorteilhaft in Wertdokumentbearbeitungsvorrichtungen eingesetzt werden. Gegenstand der Erfindung ist daher auch eine Wertdokumentbearbeitungsvorrichtung zur Bearbeitung von Wertdokumenten mit einer erfindungsgemäßen Vorrichtung und/einem erfindungsgemäßen Ultraschallsensor. Vorzugsweise verfügt die Wertdokumentbearbeitungsvorrichtung über eine Transporteinrichtung zum Transport von Wertdokumenten zu der Vorrichtung bzw. dem Ultraschallsensor, insbesondere in oder durch den Erfassungsbereich des Ultraschallsensors, und zum Abtransport von Wertdokumenten von dem Ultraschallsensor, genauer aus dem Erfassungsbereich des Ultraschallsensors hinaus. Unter einer Bearbeitung von Wertdokumenten wird dabei insbesondere eine Prüfung auf Echtheit der Wertdokumente, auf deren Zustand, beispielsweise in Bezug auf Umlauffähigkeit, eine Sortierung oder auch eine Zählung nach Anzahl und/oder dem Wert verstanden. Der Ultraschallsensor kann dabei insbesondere auch zur Prüfung auf Doppel- oder Mehrfachabzüge von Wertdokumenten von einem Stapel durch einen Vereinzler oder zur Prüfung des Zustands eines Wertdokuments, insbesondere auch des Vorhandenseins eines Films, beispielsweise eines Klebefilms, auf dem Wertdokument, verwendet werden.

Die Erfindung wird im Folgenden noch näher anhand der Zeichnungen erläutert. Es zeigen:
- Fig.1: eine schematische Darstellung einer Banknotenbearbeitungsvorrichtung,
- Fig. 2: eine schematische Seitenansicht eines Ultraschallsensors der Banknotenbearbeitungsvorrichtung in Fig. 1,
- Fig. 3: eine schematische Draufsicht auf einen Halter des Ultraschallsensors in Fig. 2 mit darin gehaltenen Ultraschallwandlern,
- Fig. 4: eine schematische Ansicht eines Schnitts durch einen Abschnitt des Halters in Fig. 3 entlang einer Ebene orthogonal auf eine Oberfläche des Halters,
- Fig. 5: eine schematische Draufsicht auf ein Formteil eines Halter eines zweiten Ultraschallsensors,
- Fig. 6: eine schematische Ansicht eines Schnitts durch einen Abschnitt des Halters des zweiten Ultraschallsensors,
- Fig. 7: eine schematische Ansicht eines Schnitts durch einen Abschnitt eines Halters eines dritten Ultraschallsensors entlang einer Ebene orthogonal auf eine Oberfläche des Halters,
- Fig. 8: eine schematische Draufsicht auf eine Platte des Halters in Fig. 7,
- Fig. 9: eine schematische Draufsicht auf einen Halter eines vierten Ultraschallsensors mit darin gehaltenen Ultraschallwandlern,
- Fig.10: eine schematische Ansicht eines Schnitts durch den vierten Ultraschallsensor entlang einer Ebene orthogonal zur einer Oberfläche eines Halters des Ultraschallsensors,
- Fig. 11: eine schematische Ansicht eines Schnitts durch einen Abschnitt eines Halters eines fünften Ultraschallsensors entlang einer Ebene orthogonal auf eine Oberfläche des Halters,
- Fig. 12: eine schematische Draufsicht auf eine Platte des Halters in Fig. 11,
- Fig. 13: eine schematische Ansicht eines Schnitts durch einen Abschnitt eines Halters eines sechsten Ultraschallsensors entlang einer Ebene orthogonal auf eine Oberfläche des Halters, und
- Fig. 14: eine schematische Ansicht eines Schnitts durch einen siebten Ultraschallsensor entlang einer Ebene orthogonal zur einer Oberfläche eines Halters des Ultraschallsensors.

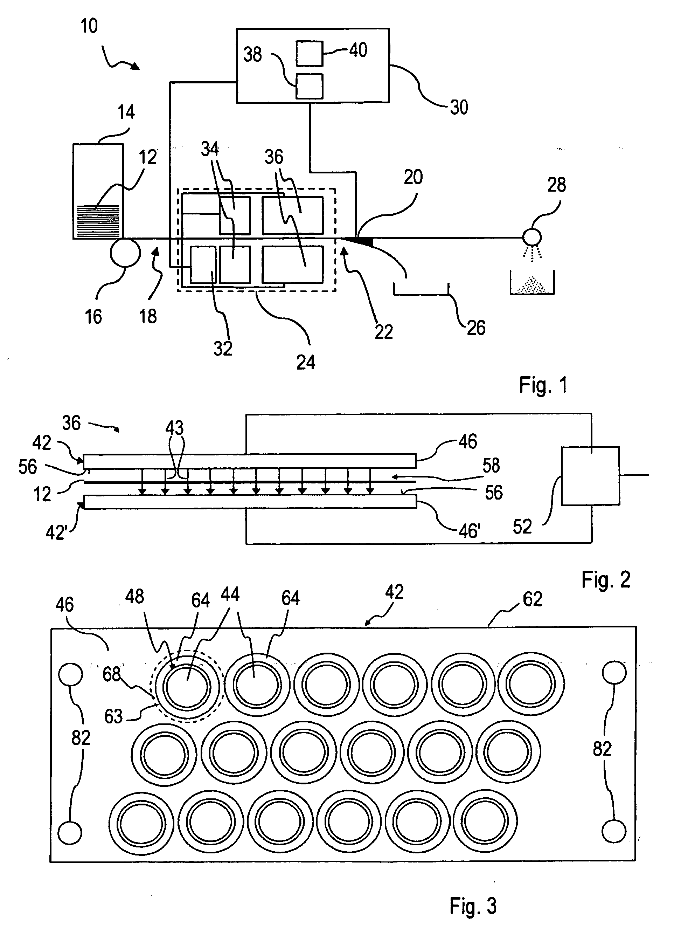

Fig.1 zeigt eine Vorrichtung 10 zur Bestimmung eines Zustands von Wertdokumenten, im Beispiel eine Banknotenbearbeitungsvorrichtung, die unter anderem zur Ermittlung des Zustands von Wertdokumenten 12 in Form von Banknoten dient. Die Vorrichtung 10 verfügt über ein Eingabefach 14 für die Eingabe von zu bearbeitenden Wertdokumenten 12, einen Vereinzler 16, der auf in dem Eingabefach 14 gestapelte Wertdokumente 12 zugreifen kann, eine Transporteinrichtung 18 mit einer Weiche 20, und nach der Weiche 20 ein Ausgabefach 26 und einen Schredder 28 zur Vernichtung von Wertdokumenten bzw. Banknoten. Entlang eines durch die Transporteinrichtung 18 gegebenen Transportpfades 22 ist vor der Weiche 20 und nach dem Vereinzler 16 eine Sensoranordnung 24 angeordnet, die zur Erfassung von Eigenschaften vereinzelt zugeführter Wertdokumente 12 und Bildung von die Eigenschaften wiedergebenden Sensorsignalen dient. Eine Steuer- und Auswerteeinrichtung 30 ist wenigstens mit der Sensoranordnung 24 und der Weiche 20 über Signalverbindungen verbunden und dient zur Auswertung von Sensorsignalen der Sensoranordnung 24 und Ansteuerung wenigstens der Weiche 20 in Abhängigkeit von dem Ergebnis der Auswertung der Sensorsignale, d.h. der mittels der Sensoranordnung erfaßten Eigenschaften der geprüften Wertdokumente 12.

Die Sensoranordnung 24 umfaßt dazu wenigstens einen Sensor; in diesem Ausführungsbeispiel sind drei Sensoren vorgesehen, nämlich ein erster Sensor 32, im Beispiel ein optischer Sensor zur Erfassung farblicher Eigenschaften, der von dem Wertdokument remittierte optische Strahlung erfaßt, ein zweiter Sensor 34, im Beispiel ebenfalls ein optischer Sensor zur Erfassung spezieller spektraler Sicherheitsmerkmale der Wertdokumente, der von dem Wertdokument transmittierte optische Strahlung erfaßt, und ein dritter Sensor 36, im Beispiel ein akustischer Sensor, genauer ein Ultraschallsensor, der von dem Wertdokument stammende, insbesondere transmittierte, Ultraschallsignale erfaßt.

Klebestreifen auf den Wertdokumenten 12 können beispielsweise mittels des Sensors 36, erkannt werden. Zur Charakterisierung des Zustands der Banknoten kann die Steuer- und Auswerteeinrichtung 30 hierzu beispielsweise die Anzahl der Klebestreifen oder die Gesamtlänge bzw. Gesamtfläche der Klebestreifen aus den Sensorsignalen des Sensors 36 ermitteln.

Während des Vorbeitransports eines Wertdokuments 12 erfassen die Sensoren 32, 34 und 36 entsprechend ihrer Funktion Eigenschaften von durch die Relativlage der Sensoren zu dem Wertdokument bestimmten Abtastbereichen auf dem Wertdokument, wobei die entsprechenden Sensorsignale gebildet werden. Jeder der Sensoren kann dabei eine andere räumliche Auflösung aufweisen, d.h. die Größe und Verteilung der erfaßten Abtastbereiche auf dem Wertdokument können in Abhängigkeit von dem jeweiligen Sensor und der verwendeten Transportgeschwindigkeit variieren. Jedem der Abtastbereiche ist dabei ein Ort zugeordnet, der die Lage der Abtastbereiche für den jeweiligen Sensor zueinander und/ oder relativ zu dem Wertdokument wiedergibt.

Aus den analogen oder digitalen Sensorsignalen der Sensoren 32, 34, 36 wird von der Steuer- und Auswerteeinrichtung 30 bei einer Sensorsignalauswertung wenigstens eine Eigenschaft wenigstens eines Abtastbereichs und/ oder wenigstens eine Wertdokumenteigenschaft ermittelt, die für die Überprüfung der Banknoten in Bezug auf deren Zustand relevant sind. Vorzugsweise werden mehrere dieser Eigenschaften ermittelt. Weiter wird mittels der Signale des Sensors 34 die Echtheit der Wertdokumente überprüft. Die Wertdokumenteigenschaften charakterisieren den Zustand der Wertdokumente, in diesem Beispiel den Zustand der Banknoten in Bezug auf die Verkehrsfähigkeit bzw. Umlauffähigkeit, d.h. die Eignung weiterhin als Zahlungsmittel verwendet werden zu können. Als entsprechende Wertdokumenteigenschaften werden in diesem Beispiel insbesondere das Vorhandensein von Verschmutzungen oder Flecken sowie das Vorhandensein von Rissen, Klebestreifen, Eselsohren und/ oder Löchern, und/ oder das Fehlen von Bestandteilen der Wertdokumente verwendet. Diese Wertdokumenteigenschaften können in Abhängigkeit von Sensorsignalen nur eines der Sensoren oder wenigstens zweier der Sensoren ermittelt werden.

Die Steuer- und Auswerteeinrichtung 30 verfügt dazu insbesondere neben entsprechenden Schnittstellen für die Sensoren über einen Prozessor 38 und einen mit dem Prozessor 38 verbundenen Speicher 40, in dem wenigstens ein Computerprogramm mit Programmcode gespeichert ist, bei dessen Ausführung der Prozessor 38 die Vorrichtung steuert bzw. die Sensorsignale, insbesondere zur Ermittlung eines Gesamtzustands eines geprüften Wertdokuments, auswertet und entsprechende der Auswertung die Transporteinrichtung 18 ansteuert.

Insbesondere kann die Steuer- und Auswerteeinrichtung 30, genauer der Prozessor 38 darin, nach Ermittlung der Wertdokumenteigenschaften ein Kriterium für den Gesamtzustand des Wertdokuments prüfen, in das wenigstens eine der Wertdokumenteigenschaften eingeht bzw. das von wenigstens einer der Wertdokumenteigenschaften abhängt. In das Kriterium können insbesondere weiter Referenzdaten zur Festlegung eines noch zulässigen Zustands des Wertdokuments eingehen, die vorgegeben und in dem Speicher 40 gespeichert sind. Der Gesamtzustand kann beispielsweise durch zwei Kategorien "noch umlauffähig" bzw. "verkehrsfähig" oder "zu vernichten" gegeben sein. In Abhängigkeit von dem ermittelten Zustand steuert die Steuer- und Auswerteeinrichtung 30, insbesondere der Prozessor 38 darin die Transporteinrichtung 18, genauer die Weiche 20, so an, daß das geprüfte Wertdokument entsprechend seinem ermittelten Gesamtzustand zur Ablage in das Ausgabefach 26 (falls noch umlauffähig) oder zur Vernichtung zu dem Shredder 28 transportiert wird (falls zu vernichten).

Zur Bearbeitung von Wertdokumenten 12 werden in das Eingabefach 14 als Stapel oder einzeln eingelegte Wertdokumente 12 von dem Vereinzler 16 vereinzelt und vereinzelt der Transporteinrichtung 18 zugeführt, die die vereinzelten Wertdokumente 12 der Sensoranordnung 24 zuführt. Diese erfaßt wenigstens eine Eigenschaft der Wertdokumente 12, wobei Sensorsignale gebildet werden, die die Eigenschaft des Wertdokuments wiedergeben. Die Steuer- und Auswerteeinrichtung 30 erfaßt die Sensorsignale, ermittelt in Abhängigkeit von diesen einen Zustand des jeweiligen Wertdokuments und steuert in Abhängigkeit von dem Ergebnis die Weiche 20 so an, daß beispielsweise noch verwendbare Wertdokumente dem Ausgabefach 26 und zu vernichtende Wertdokumente dem Shredder 28 zur Vernichtung zugeführt werden.

Zur Ermittlung des Gesamtzustands der Banknoten verwendet die Steuerund Auswerteeinrichtung 30 das bereits erwähnte Kriterium, in das wenigstens eine der Eigenschaften eingehen kann. Die einzelnen Werte können vorzugsweise beispielsweise in einem Kriterium verknüpft werden, beispielsweise mittels einer Linearkombination. Die Steuer- und Auswerteeinrichtung 30 vergleicht dann zur Ermittlung des Gesamtzustands der Banknoten die Linearkombination der den Zustand der Banknoten charakterisierenden Eigenschaften mit einem vorgegebenen Wert und entscheidet beispielsweise ob der Zustand der Banknoten gut oder schlecht ist, d. h. ob sie umlauffähig sind oder nicht. Dadurch wird erreicht, daß eine Banknote, die bereits eine erhebliche Verschmutzung aufweist, die aber für sich allein noch nicht dazu führen würde, daß der Zustand der Banknote als schlecht ermittelt werden würde, als schlecht ermittelt wird, wenn die Banknote zusätzlich z. B. auch nur wenige Flecken und/ oder Risse usw. aufweist.

Der Ultraschallsensor 36, ein Ultraschallsensor nach einer ersten bevorzugten Ausführungsform der Erfindung, insbesondere der ersten Alternative, ist teilweise in den Figuren 2 bis 5 genauer gezeigt.

Der Ultraschallsensor 36 ist zur Untersuchung von Wertdokumenten 12 mittels durch diese hindurchtretenden Ultraschall vorgesehen und besitzt hierzu zwei Vorrichtungen 42 und 42' zur Abgabe bzw. zum Empfang von Ultraschall in einem vorgegebenen Frequenzbereich, die nach einer ersten bevorzugten Ausführungsform der Erfindung und bis auf eine Spiegelung an einer Ebene gleich ausgebildet sind.

Die Vorrichtungen 42 und 42' zur Abgabe bzw. zum Empfang von Ultraschall in dem vorgegebenen Frequenzbereich verfügen jeweils über wenigstens einen, in diesem Beispiel achtzehn, Ultraschallwandler 44 zur Umwandlung von elektrischen Signalen in Ultraschall bzw. zur Wandlung von Ultraschall in elektrische Signale und jeweils einen Halter 46 bzw. 46', in dem eine der Anzahl der Ultraschallwandler entsprechende Anzahl von Ultraschallkanälen 48, im Beispiel durch Abschnitte von Durchgangslöchern 50, ausgebildet ist, in denen jeweils einer der Ultraschallwandler 44 wenigstens teilweise angeordnet ist und durch die Ultraschall von bzw. zu dem jeweiligen Ultraschallwandler 44 gelangen kann.

Der Ultraschallsensor 36 besitzt weiter eine Ansteuer- und Signalverarbeitungseinrichtung 52, die über nur schematisch gezeigte elektrische Verbindungen 54 den Ultraschallwandlern 44 und, in Fig. 2 nicht gezeigt, mit der Steuer- und Auswerteeinrichtung 30 zum Austausch von Signalen und zur Stromversorgung verbunden ist.

Die Halter 46 und 46' sind in ihrer Grundform plattenartig ausgebildet und mit ihren Plattenoberflächen 56 parallel zueinander angeordnet, so daß sich diese in einer Richtung orthogonal zu den Plattenoberflächen 56 decken. Durch einen zwischen den Haltern 46 und 46' gebildeten Spalt, der gleichzeitig einen Erfassungsbereich 58 darstellt, verläuft der Transportpfad 22, so daß durch den Erfassungsbereich 58 transportierte Wertdokumente 12 mittels Ultraschall in Transmission untersucht werden können. Mit anderen Worten sind die Vorrichtungen 42 und 42' so relativ zueinander angeordnet, daß die Ultraschallwandler der Vorrichtungen Ultraschallstrecken 43 bilden, wenn von zwei sich in einer Richtung orthogonal zu den Plattenoberflächen 56 gegenüberliegen Ultraschallwandlern 44 einer als Sender und der andere als Empfänger betrieben wird. Wie in Fig. 2 veranschaulicht, sind die Ultraschallwandler 44 also so angeordnet, daß die zwischen Sendern und Empfänger gebildeten Ultraschallstrecken 43 in guter Näherung orthogonal zu dem Wertdokument 12 bzw. den Plattenoberflächen 56 verlaufen.

Genauer werden die Ultraschallwandler 44 in dem Halter 46 als Ultraschallsender verwendet bzw. angesteuert, während die Ultraschallwandler 44 in dem Halter 46' als Empfänger für Ultraschall dienen, der durch eine Wertdokument 12 hindurchgetreten ist bzw. von diesem abgestrahlt wird. Die als Empfänger dienenden Ultraschallwandler geben bei Detektion von Ultraschall entsprechende Detektionssignale ab.

Die Ultraschallwandler 44 sind in diesem Ausführungsbeispiel so ausgebildet, daß sie zur Wandlung von Ultraschall mit einer vorgegebenen Frequenz von etwa 400 kHz geeignet sind. Um auch Pulse mit einer Dauer kleiner als 100 µs wandeln zu können, sind sie vorzugsweise zur Wandlung von Ultraschall in einem Frequenzbereich mit einer Breite von etwa 70 kHz, in dessen Mitte die vorgegebene Frequenz liegt ausgebildet.

Jeder der im Beispiel zylindrischen Ultraschallwandler 44 verfügt entlang seines Umfangs über eine Haltenut 60. Weiter verfügt er an seiner dem Erfassungsbereich 58 abgewandeten Stirnseite über zwei elektrische Kontakte, im Beispiel die Anschlußdrähte 54, zur direkten oder indirekten elektrischen Verbindung des Ultraschallwandlers 44 mit der Ansteuer- und Signalverarbeitungseinrichtung 52.

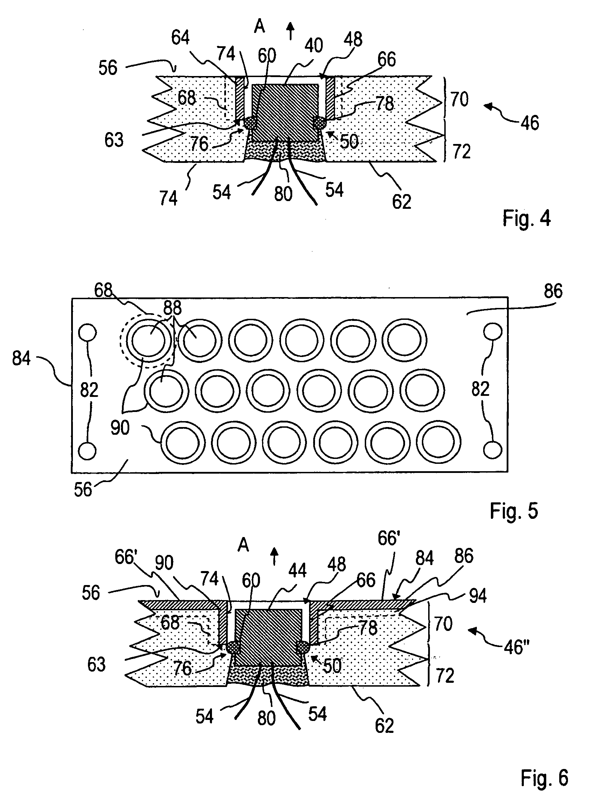

Der Halter 46, der wie bereits beschrieben bis auf die Spiegelung wie der Halter 46' ausgebildet ist, ist in den Figuren 3 und 4 genauer gezeigt.

Der Halter 46 weist zum einen einen plattenförmigen Grundkörper 62 auf, in dem in drei zueinander versetzten Reihen in jeweils gleichem Abstand zueinander die gleich ausgebildeten, orthogonal zu den Plattenoberflächen 56 des Halters 46 bzw. Grundkörpers 62 verlaufende Aufnahmen 63, im Beispiel Durchgangslöcher, ausgebildet sind.

Zum anderen weist der Halter 46 an einem Abschnitt der Innenseite jedes Durchgangslöcher 50 bzw. in einem Abschnitt der Aufnahmen 63 Hülsenabschnitte bzw. hohlzylindrische Abschnitte 64 auf, die aus einem anderen Material gebildet sind als der Grundkörper 62. Die Innenräume der Hülsenabschnitte 64 bilden Ultraschallkanäle 48, in denen sich von dem jeweiligen Ultraschallwandler abgegebener oder zu empfangender Ultraschall ausbreiten kann.

Der Grundkörper 62 ist in diesem Ausführungsbeispiel aus einem glasfaserverstärkten Polymer, einem Kunstharz, ausgebildet, und weist eine Dicke von etwa 8 mm auf. Das verwendete glasfaserverstärkte Kunstharz hat eine Dichte von etwa 1,3 g/cm³ und für die vorgegebene Frequenz eine Impedanz von etwa 3 ·10⁶ kg/(m²s).

Die Hülsenabschnitte 64 dagegen sind aus einem Verbundwerkstoff, und damit insbesondere einem Verbundwerkstoff mit einem Volumenanteil an dem Hülsenabschnitt 64 von mehr als 80%, in diesem Ausführungsbeispiel einem für Ultraschall der vorgegebenen Frequenz wenigstens teilweise durchlässigen syntaktischen Schaum gefertigt und bilden eine nicht-fasrige Oberflächenschicht 66, deren Impedanz kleiner ist als die des Grundkörpers 62 und damit einer zu der Oberflächenschicht 66 benachbarten, insbesondere an diese angrenzenden, Innenschicht 68 des Grundkörpers 62 und damit des Halters 46.

Ein Querschnitt durch den Halter 46 im Bereich eines der Durchgangslöcher 50 ist schematisch in Fig. 5 gezeigt. Die anderen entsprechenden Abschnitte des Halters 46 sind gleich ausgebildet.

Jedes Durchgangsloch 50 weist im wesentlichen zwei Abschnitte 70 und 72 mit unterschiedlichen Durchmessern auf, von denen der Abschnitt 70, der auf der zu dem Erfassungsbereich gewandten Oberfläche 56 mündet, den größeren Durchmesser aufweist. Dadurch wird auf einer das Durchgangsloch 50 bildenden inneren Oberfläche bzw. Wand 74 des Halters 46 in einem mittleren Abschnitt eine ringförmig verlaufende Schulter 76 gebildet. Dieser Abschnitt 70 umfaßt auch den Hülsenabschnitt 64.

Der Ultraschallwandler 44 wird über ein Halteelement, im Beispiel einen Rundring 78, aus elastischem, vorzugsweise schalldämpfendem Material, das in die Haltenut 60 unter Vorspannung eingelegt ist, auf der Schulter 76 in einer durch die Lage der Schulter 76 und die Lage der Haltenut 60 relativ zu dem Halter 46 vorgegebenen Richtung ausgerichtet gehalten, im Beispiel in den Figuren 2 bis 5 in Richtung wenigstens näherungsweise orthogonal zu den Plattenoberflächen 56. Dadurch ergibt sich eine entsprechende Ausrichtung der Empfangs- bzw. Sendecharakteristik (Empfindlichkeit) relativ zu dem Halter 46; das Maximum und damit die Abstrahlrichtung A liegt näherungsweise in einer Richtung wenigstens näherungsweise orthogonal zu den Plattenoberflächen 56. Dadurch sind bei der gezeigten Anordnung der Halter 46 und 46' die Sende- und die Empfangscharakteristiken der Ultraschallwandler jeweils einer Ultraschallstrecke genau aufeinander ausgerichtet.

Das Material der Hülsenabschnitte 64 und damit der durch diese gebildeten Oberflächenschichten 66 weist eine Dichte zwischen 0,3 g/cm³ und 0,8 g/cm³, vorzugsweise zwischen 0,4 g/cm³ und 0,7 g/cm³ auf.

Das Verbundmaterial der Hülsenabschnitte 64 umfaßt eine Matrix mit eingelagerten Körpern. In diesem Ausführungsbeispiel handelt es sich dabei genauer um einen syntaktische Schaum, der in einem Matrixmaterial Hohlkörper, hier Hohlkugeln, mit einem Durchmesser zwischen 5 µm und 200 µm, vorzugsweise zwischen 5 µm und 120 µm, enthält, wobei in der Matrix auch noch Hohlkugeln anderer Größe vorliegen können. Die Durchmesserverteilung der Hohlkugeln ist so gewählt, daß sich eine hohe Packungsdichte ergibt, obwohl in anderen Ausführungsbeispielen auch eine monodisperse Verteilung verwendet werden kann. Die Durchmesserverteilung kann insbesondere bimodal sein.

Im vorliegenden Beispiel enthält der syntaktische Schaum als Hohlkörper Glashohlkugeln, deren Durchmesser vorzugsweise zwischen 10 µm und 200 µm liegt.

Als Matrixmaterial umfaßt der syntaktische Schaum hier ein Polymermaterial, insbesondere ein Harz. In diesem Ausführungsbeispiel handelt es sich bei dem Polymermaterial um ein Epoxidharz.

In diesem Ausführungsbeispiel besitzt der syntaktische Schaum und damit die Oberflächenschicht 66 eine mittlere Dichte von 0,5 g/cm³, die damit wenigstens 10% geringer als die der Innenschicht 68 ist, und eine Schallgeschwindigkeit für Ultraschall der vorgegebenen Frequenz von etwa 2500 m/s, also eine Impedanz von etwa 1,3·10⁶ kg/(m²s), die somit zwischen 20% und 75% der Impedanz des Grundkörpers 62 und damit der Innenschicht 68, im Beispiel etwa 43 % beträgt.

Die von dem jeweiligen Hülsenabschnitt 64 gebildete Oberflächenschicht 66 umschließt daher den Ultraschallkanal ringartig, so daß eine gleichmäßige Änderung des akustischen Verhaltens durch die Oberflächenschicht erreicht wird. Die Innenschicht 68 höherer Impedanz wiederum umschließt die Oberflächenschicht 66.

Die Dicke der Oberflächenschicht 66, d.h. die Wandstärke des Hülsenabschnitts 64, ist größer als ein Viertel der der vorgegebenen Frequenz entsprechenden Wellenlänge in der Oberflächenschicht 66 und kleiner als 10 mm, in diesem Beispiel etwa 1,5 mm.

Weiter erstreckt sich in diesem Ausführungsbeispiel der Hülsenabschnitt 64 und damit die Oberflächenschicht 66 in einer Richtung orthogonal zu der Oberfläche 56 bzw. parallel zu dem Ultraschalkanal bzw. der Abstrahlrichtung A von der Oberfläche 56 bis zu der Halteeinrichtung für den Ultraschallwandler 44, hier die Schulter 76.

In diesem Ausführungsbeispiel sind die Haltenut 60 und die Schulter 76 in Verbindung mit der Dicke des Halters 46 so ausgebildet, daß der Ultraschallwandler 44 wenigstens teilweise, im Beispiel vollständig, in dem Ultraschallkanal 48 versenkt ist.

Der Hülsenabschnitt 64 ist im wesentlichen formschlüssig in die Aufnahme 63 in dem Grundkörper 62 eingesetzt und materialschlüssig mit diesem verbunden. Der Materialschluß wird im vorliegenden Beispiel durch einen Epoxidharzkleber erreicht, der im ausgehärteten Zustand eine Impedanz aufweist, die der der Innenschicht 68 entspricht und insbesondere nicht signifikant größer als die der Innenschicht 68 ist.

Durch diese Ausbildung der Halter 46 und 46' kann eine starke Reduktion der Amplitude ein- oder mehrfach reflektierter Pulse bzw. der Ausbildung stehender Wellen bei kontinuierlichem Betrieb erreicht werden.

Weiter sind die Ultraschallwandler 44 durch die Versenkung in den Durchgangslöchern 50 gegen mechanische Einwirkung in einer Richtung parallel zu den Plattenoberflächen gut geschützt.

Als optionales Merkmal ist zum Schutz der Kontaktierung der Verbindungsleitungen 54 an dem Ultraschallwandler 44 vor mechanischen und chemischen Einflüssen und zur weiteren mechanischen Stützung des Ultraschallwandlers 44 in dem Durchgangsloch 50 der Bereich des Durchgangslochs 50 von dem Ultraschallwandler 44 bis zu der Plattenoberfläche 56 mit einem polymeren Material 80 vergossen, das elektrisch isolierend und wenigstens soweit elastisch ist, daß es durch Temperaturschwankungen hervorgerufene Unterschied in den Dimensionsänderungen von Ultraschallwandlern und Löchern ausgleichen kann. Dieses Material ist der Übersichtlichkeit halber in Fig. 3 nicht gezeigt.

Der Halter 46 verfügt schließlich über Befestigungslöcher 82 zur Befestigung in der Wertdokumentbearbeitungsvorrichtung.

Ein zweites Ausführungsbeispiel, das gleichzeitig eine bevorzugte Ausführungsform gemäß der dritten Alternative der Erfindung darstellt, unterscheidet sich von dem ersten Ausführungsbeispiel nur dadurch, daß die Oberflächenschichten 66 auf andere Art und Weise bereitgestellt werden und die Halter dementsprechend modifiziert sind. Alle anderen Bauteile und Merkmale sind die gleichen wie im ersten Ausführungsbeispiel, so daß für diese die gleichen Bezugszeichen verwendet werden und die Beschreibung derselben und ihrer Funktion auch hier entsprechend gilt.

Wie in den Figuren 5 und 6 schematisch dargestellt, ist nun ein Formteil 84 vorgesehen, das aus dem gleichen Material gefertigt ist wie die Oberflächenschichten 66 in dem ersten Ausführungsbeispiel.

Das Formteil 84 verfügt über einen Plattenabschnitt 86 mit Durchgangslöchern 88, die, wenn der Plattenabschnitt 86 entsprechend auf den Grundkörper 62 gelegt wird, mit den Durchgangslöchern 50 in diesem fluchten. Um die Durchgangslöcher 88 herum bzw. mit diesen fluchtend angeordnet sind zylindrische Hülsenabschnitte 90, deren Dimensionen denen der Hülsenabschnitte 64 im ersten Ausführungsbeispiel entsprechen. Diese Hülsenabschnitte 90 sind aber integral mit dem Plattenabschnitt 86 verbunden, so daß das Formteil 84 einstückig ist. In diesem Ausführungsbeispiel ist das Formteil 84 durch Spitzguß herstellt.

Dieses Formteil 84 ist mit den Hülsenabschnitten 90, deren Innenräume wieder Ultraschallkanäle bilden, in die Aufnahmen 63 in dem Grundkörper 62 eingeführt und mit diesem zu einem Halter 46" verbunden, was beispielsweise durch Verklebung mittels eines geeigneten Klebers, beispielsweise Epoxidharz, erreicht sein kann. Auf diese Weise ergeben sich zum einen den Oberflächenschichten 66 des ersten Ausführungsbeispiels entsprechende Oberflächenschichten 66' in den Wänden der Ultraschallkanäle 48 für die Ultraschallwandler 44. Zum anderen ist nun der Grundkörper 62 auf der dem Erfassungsbereich 58 zugewandten Seite durch den Plattenabschnitt 86 abgedeckt, so daß der Halter 46" an der dem Wertdokument 12 bei einer Untersuchung zugewandten Oberfläche 56 eine durch den Plattenabschnitt 86 gebildete nicht-fasrige Oberflächenschicht 92 aufweist, deren Impedanz kleiner ist als die einer an die Oberflächenschicht angrenzenden Innenschicht 94 des Halters 46", die durch einen entsprechenden Abschnitt des Grundkörpers 62 gebildet wird. Die Impedanzunterschiede sind die gleichen wie im ersten Ausführungsbeispiel.

Der andere nicht gezeigte Halter ist analog zum ersten Ausführungsbeispiel bis auf eine Spiegelung gleich aufgebaut wie der Halter 46". Dies braucht jedoch in anderen Ausführungsbeispielen nicht unbedingt der Fall zu sein.

Durch diese Ausbildung der Halter können auch Reflexionen an den Oberflächen der Halter und damit in dem durch diese gebildeten Kanal vermieden werden, was zusätzlich auch ein Übersprechen zwischen benachbarten Ultraschallstrecken reduzieren kann.

Weiterhin wird die Herstellung der Hülsenabschnitte und deren Montage erleichtert, was insbesondere bei Ultraschallsensoren mit einer großen Anzahl von Ultraschallstrecken ein erheblicher Vorteil sein kann.

In anderen Ausführungsbeispielen ist es auch möglich, syntaktische Schäume mit einem anderen, insbesondere polymeren Matrixmaterial zu verwenden. Beispielsweise kann auch Polyurethan eingesetzt werden.

In noch anderen Ausführungsbeispielen kann die Richtung der Ultraschallkanäle 48 bzw. die Hauptabstrahl- und Empfangsrichtung A der Ultraschallwandler 44 und damit der Ultraschallstrecke gegenüber der Oberfläche 56 und somit gegenüber einem zu untersuchenden Wertdokument 12 geneigt sein.

Weitere Ausführungsbeispiele können sich von den zuvor geschilderten Ausführungsbeispielen dadurch unterscheiden, daß statt der Durchgangslöcher 50 Sacklöcher vorgesehen sind, in denen die Ultraschallwandler 44 wenigstens teilweise angeordnet sind.

In anderen Ausführungsbeispielen können die Durchgangslöcher auch Haltestrukturen an deren Innenseite, beispielsweise Vorsprünge in Form von Nasen, aufweisen, die die Ultraschallwandler 44 unmittelbar halten.

Noch weitere Ausführungsbeispiele können sich von den zuvor geschilderten Ausführungsbeispielen dadurch unterscheiden, daß die Hülsenabschnitte so ausgebildet sind, daß sie als Aufnahmen bzw. Halteeinrichtungen für die Ultraschallwandler dienen. Dazu können die Hülsenabschnitte an ihrer Innenseite ähnlich wie die Aufnahmen 63 mit einer Haltestruktur, beispielsweise Vorsprüngen oder einer umlaufenden Schulter ausgestattet sein.

Darüber hinaus können sich weitere Ausführungsbeispiele von den beschriebenen Ausführungsbeispielen dadurch unterscheiden, daß die Ultraschallwandler teilweise aus den Ultraschallkanälen 48 herausragen.

Weiter ist es möglich, daß der Grundkörper 62 in den Ausführungsbeispielen wenigstens zwei miteinander verbundene, insbesondere aneinandergeklebte oder aneinanderhaftende Schichten aufweist.

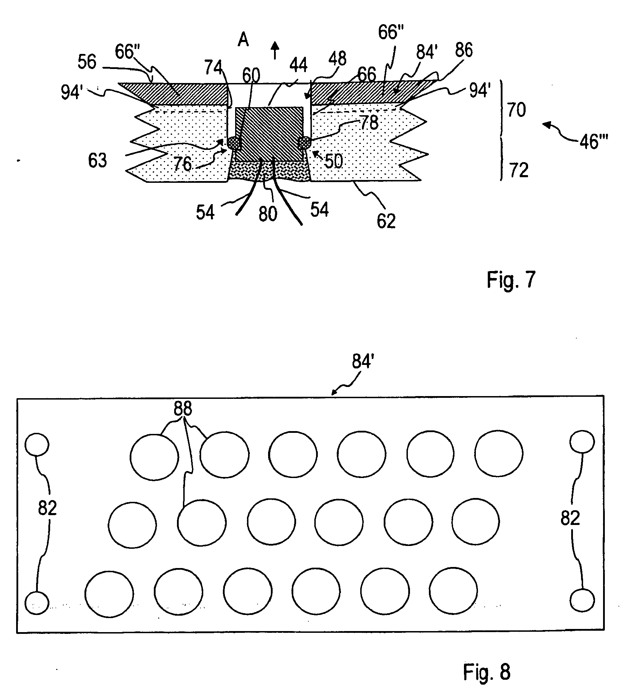

Ein Ultraschallsensor nach einer dritten bevorzugten Ausführungsform der Erfindung, genauer einer bevorzugten Ausführungsform der zweiten Alternative gemäß der Erfindung, ist in den Figuren 7 und 8 schematisch veranschaulicht.

Dieser Ultraschallsensor unterscheidet sich von dem Ultraschallsensor des zweiten Ausführungsbeispiels nur durch die Ausbildung des Halters 46'". Alle anderen Elemente des Ausführungsbeispiels unterscheiden sich nicht von dem zweiten Ausführungsbeispiel, so daß für gleiche Elemente die gleichen Bezugszeichen verwendet werden und die Erläuterungen zu diesen entsprechend auch hier gelten. Die verwendeten Materialien sind die gleichen wie im zweiten Ausführungsbeispiel.

Wie in den Figuren 7 und 8 veranschaulicht unterscheidet sich der Halter 46"' von dem Halter 46" zum einen dadurch, daß statt des Formteils 84 nun ein plattenförmiges Formteil 84' verwendet wird, das die hülsenartigen Abschnitte 90 nicht mehr aufweist und daher im wesentlichen durch eine Platte gegeben ist, in der neben den Löchern 82 Durchgangslöcher 88 zur Bildung von Abschnitten der Ultraschallkanäle 48 ausgebildet sind. Die Dicke des Formteils 84 ist in den Figuren nicht maßstabsgetreu gezeigt. Sie kann im Beispiel etwa 5 mm betragen.

Da nun die Hülsenabschnitte 90 fehlen, unterscheidet sich der Grundkörper 62' von dem Grundkörper 62 dadurch, daß nun die Durchgangslöcher 50 im Bereich des Abschnitts 70 einen Innendurchmesser aufweisen, der dem der Ultraschallkanäle und damit der Durchgangslöcher 88 entspricht.

Wie in Fig. 7 veranschaulicht verläuft die Innenschicht 94' höherer Impedanz in dem Grundkörper 62' nun parallel zu dem Formteil 84' und somit der nicht-fasrigen Oberflächenschicht 66" niedrigerer Impedanz und näherungsweise orthogonal zu Richtung A der Ultraschallkanäle 48, die nun in Richtung A aneinander angrenzen.

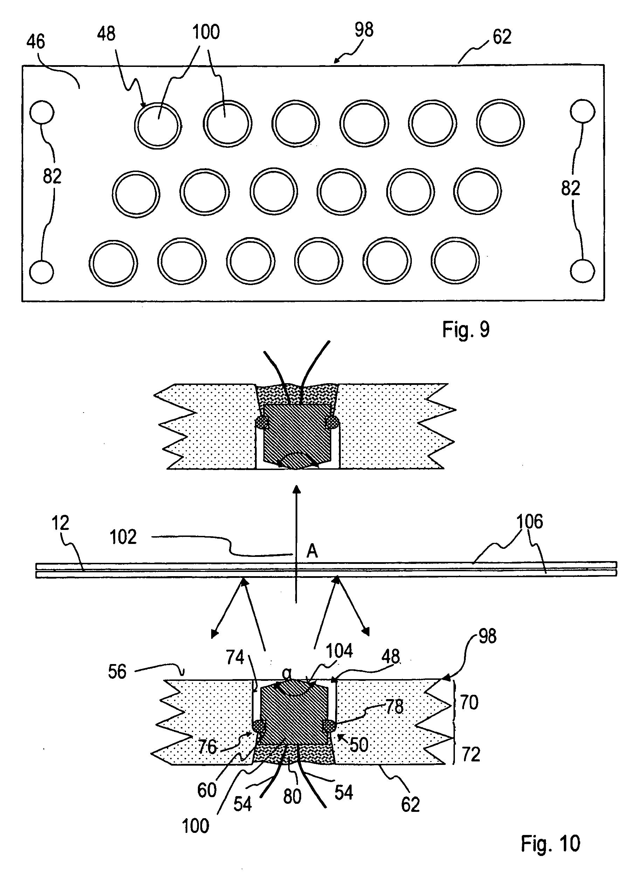

Ein Ultraschallsensor nach einer vierten bevorzugten Ausführungsform der Erfindung, genauer einer bevorzugten Ausführungsform der zweiten Alternative gemäß der Erfindung, ist in den Figuren 9 und 10 schematisch veranschaulicht.

Dieser Ultraschallsensor 96 ersetzt den Ultraschallsensor 36 in dem ersten Ausführungsbeispiel. Die Vorrichtung 10 zur Bestimmung eines Zustands von Wertdokumenten ist ansonsten unverändert.

Der Ultraschallsensor 96 unterscheidet sich von dem Ultraschallsensor 36 zum einen durch die Verwendung von Haltern 98 statt der Halter 46, 46' und zum anderen gegenüber den Ultraschallwandlern 44 modifizierten Ultraschallwandlern 100. Ansonsten ist der Ultraschallsensor unverändert und stellt somit einen Ultraschallsensor zur Prüfung eines Wertdokuments 12 in einem Erfassungsbereich 58 des Ultraschallsensors mittels Ultraschall wenigstens einer vorgegebenen Frequenz mit einem als Sender für den Ultraschall fungierenden Ultraschallwandler und einem als Empfänger für den Ultraschall fungierenden Ultraschallwandler dar, bei dem die Ultraschallwandler so angeordnet sind, daß sie eine durch den Erfassungsbereich 58 verlaufende Ultraschallstrecke 102 bilden. Die Ausführungen zu den unveränderten Teilen und Merkmalen des Ultraschallsensors des ersten Ausführungsbeispiels gelten hier entsprechend und es werden für gleiche Teile die gleichen Bezugszeichen verwendet.

Die Halter 98 sind gegenüber den Haltern 46 und 46' nur dahingehend geändert, daß sie bei gleicher Form vollständig aus demselben Material gefertigt sind, bei dem es sich insbesondere um das Material des Grundkörpers 62 in dem ersten Ausführungsbeispiel handeln kann (vgl. Fig. 9 und 10).

Die Ultraschallwandler 100 sind gegenüber den entsprechenden Ultraschallwandlern des ersten Ausführungsbeispiels dahingehend geändert, daß diese einen relativ zu der Ultraschallstrecke 102 geneigten Oberflächenabschnitt 104 zur Abstrahlung von Ultraschall und/ oder zum Empfang von Ultraschall aufweisen. Diese Neigung führt zum einen dazu, daß der abgestrahlte Ultraschall sich eher kegelförmig ausbreitet, so daß an einem geprüften Wertdokument 12 reflektierte Anteile aus dem Bereich der Ultraschallstrecke herausgelenkt werden. Zum anderen wird auf der Empfängerseite transmittierter Ultraschall, der nicht von dem jeweiligen Ultraschallwandler gewandelt wird, wenigstens teilweise kegelförmig reflektiert, so daß auch hier Teile des reflektierten Ultraschalls aus dem Bereich der Ultraschallstrecke 102 herausgelenkt werden. Die aus dem Bereich der Ultraschallstrecke herausgelenkten Anteile können keine stehenden Wellen mehr ausbilden oder zu Pulsechos führen.

Diese an die Luft als Übertragungsmedium für den Ultraschall angrenzenden Oberflächenabschnitte 104 sind kegelförmig bzw. konisch um die Richtung der Ultraschallstrecke 102 bzw. die (über den Strahlquerschnitt gemittelte) Abstrahlrichtung A als Achse ausgebildet, so daß diese rotationssymmetrisch um die Richtung der Ultraschallstrecke 102 ausgebildet sind.

Der Kegelöffnungswinkel α liegt dabei vorzugsweise zwischen 160° und 176°, im vorliegenden Beispiel bei etwa 170°. Durch diese Wahl wird ein guter Kompromiß zwischen einer Ausrichtung des abgestrahlten Ultraschalls einerseits und einer Reduktion des Auftretens stehender Wellen oder der Stärke von störenden Pulsreflexionen bei gleichzeitig noch für die Prüfzwekke ausreichender Amplitude der transmittierten Pulse erzielt.

Der Oberflächenabschnitt 104, d.h. der kegelförmige Abschnitt, weist einen maximalen Außendurchmesser in einer Ebene orthogonal zu der Symmetrieachse, bezüglich derer der Oberflächenabschnitt rotationssymmetrisch ist, auf, der zwischen der der vorgegebenen Frequenz entsprechenden Wellenlänge in Luft und dem Zehnfachen der Wellenlänge liegt. Insbesondere kann die Luft dabei einen Druck von 1 bar, eine Temperatur von 20° und eine relative Luftfeuchte von 75% aufweisen. Im Beispiel beträgt der maximale Außendurchmesser etwa 6 mm.

Wie in Fig. 10 gezeigt, weist der Ultraschallsensor wenigstens ein Transportelement zur Führung des Wertdokuments 12 in dem Erfassungsbereich 58 auf, das im vorliegenden Beispiel durch Riemen 106 gegeben ist, zwischen denen das Wertdokument 12 zum Transport gehalten ist. Die Ultraschallwandler 100 sind angeordnet, daß die Ultraschallstrecke 102 mit einer Normalen auf die Oberfläche des Wertdokuments 12 einen Winkel kleiner als 5° bildet.

Ein weiteres Ausführungsbeispiel unterscheidet sich von dem vierten Ausführungsbeispiel darin, daß nun die Halter 98 durch die Halter 46, 46' des ersten Ausführungsbeispiels oder des zweiten Ausführungsbeispiels ersetzt sind.

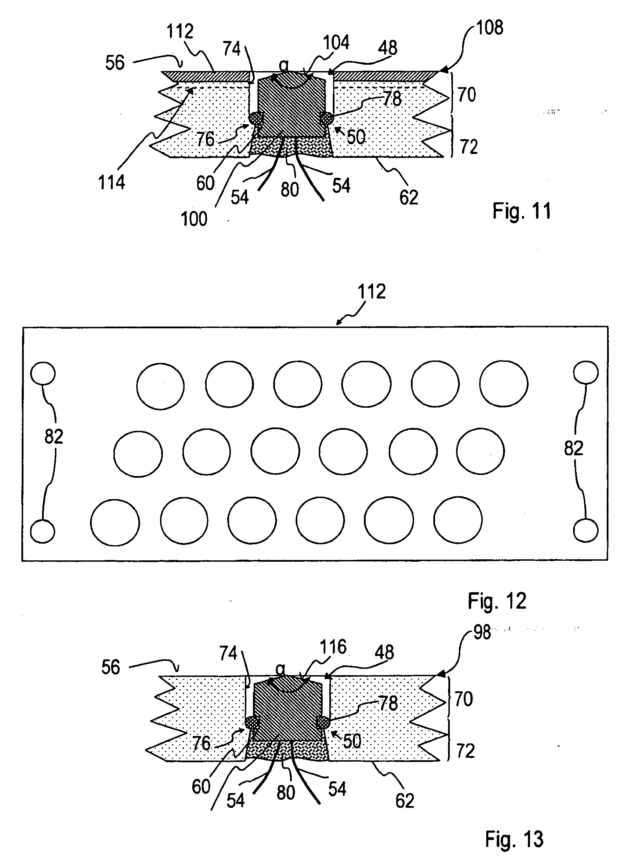

Eine fünfte bevorzugte Ausführungsform der Erfindung in Fig.11 und Fig. 12 unterscheidet sich von dem vierten Ausführungsbeispiel dadurch, daß die Halter 98 durch Halter 108 ersetzt sind. Alle anderen Teile und Merkmale des dritten Ausführungsbeispiels sind unverändert, so daß für diese die gleichen Bezugszeichen verwendet werden und die Bemerkungen zu diesen auch hier gelten.

Die Halter 108 unterscheiden sich von den Haltern 88 nur dadurch, daß auf einem dem Haltern 98 entsprechenden Grundkörper 110 eine mit dem Grundkörper 110 fest verbundene, beispielsweise verklebte, gelochte Platte 112 als dem Erfassungsbereich zugewandte Oberflächenschicht vorgesehen ist. Die Oberflächenschicht ist aus einem nicht-fasrigen Material aufgebaut, dessen Impedanz kleiner ist als die des Materials einer an die Oberflächenschicht angrenzenden Innenschicht 114 des Halters 108 ist. Dieser Halter 108 bildet ein den Erfassungsbereich begrenzendes Element und nimmt wenigstens einen Teil des auf ihn auftreffenden Ultraschalls auf, was zusätzlich den Einfluß von störenden Reflexionen herabsetzt.

Das Material der Platte 112 und damit der durch diese gebildeten Oberflächenschicht kann insbesondere eine Dichte zwischen 0,3 g/cm³ und 0,8 g/cm³, vorzugsweise zwischen 0,4 g/cm³ und 0,7 g/cm³ aufweisen.

In diesem Ausführungsbeispiel ist das Material ein Verbundmaterial, das eine Matrix mit eingelagerten Körpern umfaßt. Hier handelt es sich genauer um einen syntaktischen Schaum, der in einem Matrixmaterial Hohlkörper, hier Hohlkugeln, mit einem Durchmesser zwischen 5 µm und 200 µm, vorzugsweise zwischen 5 µm und 120 µm, enthält, wobei in der Matrix auch noch Hohlkugeln anderer Größe vorliegen können. Die Durchmesserverteilung der Hohlkugeln ist so gewählt, daß sich eine hohe Packungsdichte ergibt, obwohl in anderen Ausführungsbeispielen auch eine monodisperse Verteilung verwendet werden kann. Die Durchmesserverteilung kann insbesondere bimodal sein.

Im vorliegenden Beispiel enthält der syntaktische Schaum als Hohlkörper Glashohlkugeln, deren Durchmesser vorzugsweise zwischen 10 µm und 200 µm liegt.

Als Matrixmaterial umfaßt der syntaktische Schaum hier ein Polymermaterial, insbesondere ein Harz. In diesem Ausführungsbeispiel handelt es sich bei dem Polymermaterial um ein Epoxidharz.

In diesem Ausführungsbeispiel besitzt der syntaktische Schaum und damit die Oberflächenschicht eine mittlere Dichte von 0,5 g/cm³, die damit wenigstens 10% geringer als die der Innenschicht 68 ist, und eine Schallgeschwindigkeit für Ultraschall der vorgegebenen Frequenz von etwa 2500 m/ s, also eine Impedanz von etwa 1,3 ·106 kg/(m² s), die somit zwischen 20% und 75% der Impedanz des Grundkörpers 62 und damit der Innenschicht 114, im Beispiel etwa 43% beträgt.

Die Dicke der Platte 112, d.h. der Oberflächenschicht, ist größer als ein Viertel der der vorgegebenen Frequenz entsprechenden Wellenlänge in der Oberflächenschicht 112 und kleiner als 10 mm, in diesem Beispiel genauer 2 mm².

Dieses Ausführungsbeispiel verkörpert daher insbesondere auch eine bevorzugte Ausführungsform der dritten Alternative der Erfindung, nämlich Ultraschallsensor zur Prüfung eines Wertdokuments in einem Erfassungsbereich des Ultraschallsensors mittels Ultraschall einer vorgegebenen Frequenz mit einem als Sender für den Ultraschall fungierenden Ultraschallwandler und einem als Empfänger für den Ultraschall fungierenden Ultraschallwandler, und je einem Halter für die Ultraschallwandler, bei dem die Halter den Erfassungsbereich begrenzen und wenigstens ein den Erfassungsbereich begrenzender Abschnitt wenigstens eines der Halter in der Umgebung des in oder an dem Halter angeordneten Ultraschallwandlers eine nicht-fasrige Oberflächenschicht aufweist, deren Impedanz kleiner ist als die einer an die Oberflächenschicht angrenzenden Innenschicht des Halters.

Bei noch einem weiteren Ausführungsbeispiel kann als Ultraschallwandler für den Empfang von Ultraschall ein Ultraschallwandler des ersten Ausführungsbeispiels verwendet werden.

Ein weiteres Ausführungsbeispiel unterscheidet sich von dem fünften Ausführungsbeispiel dadurch, daß statt der Ultraschallwandler 100 die Ultraschallwandler 44 des ersten Ausführungsbeispiels verwendet werden.

Eine weitere Variante des vierten Ausführungsbeispiels ist in Fig.11 gezeigt. Sie unterscheidet sich von dem vierten Ausführungsbeispiel nur durch die Form des Oberflächenabschnitts 116, der zwar nun auch gegen die Richtung der Ultraschallstrecke geneigt und rotationssymetrisch um diese ausgebildet ist. Der Oberflächenabschnitt 116 ist jedoch kegelförmig zu seinem Zentrum hin bzw. entgegen der Abstrahlrichtung A des Ultraschalls abgesenkt.

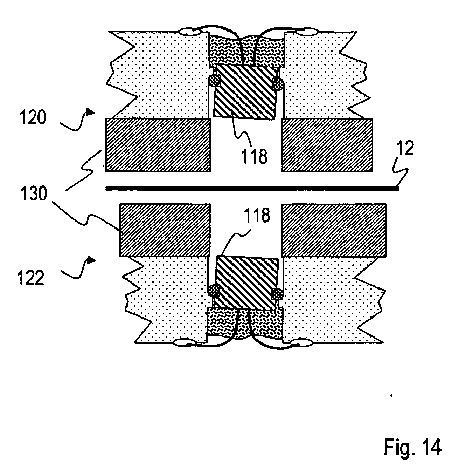

Bei einem siebten Ausführungsbeispiel in Fig.14 verfügt ein Ultraschallsensor zur Prüfung eines Wertdokuments in einem Erfassungsbereich des Ultraschallsensors mittels Ultraschall einer vorgegebenen Frequenz mit einem als Sender für den Ultraschall fungierenden Ultraschallwandler 118 und einem als Empfänger für den Ultraschall fungierenden Ultraschallwandler 118, je einem Halterabschnitt 120 und 122 für den Sender und den Empfänger, die jeweils miteinander fluchtende Ultraschallkanäle aufweisen, in denen der Sender bzw. der Empfänger vollständig versenkt so angeordnet sind, daß sie eine durch den Erfassungsbereich verlaufende Ultraschallstrecke bilden. Die Ultraschallwandler 118 sind gegenüber einer Fluchtachse der Ultraschallkanäle geneigt angeordnet. Durch die gegenüber der Ultraschallsstrecke und dem Ultraschallkanal geneigte Anordnung der Ultraschallwandler wird zwar eine Ultraschallstrecke gebildet, mögliche Echos wandern jedoch zur Seite aus.

Besonders bevorzugt weisen auch hier die Oberflächen der Ultraschallkanäle und die Oberflächen der Halter abschnitt 120 und 122 eines Schicht aus einem fasrigen schalldämpfenden oder schalldämmenden Material, beispielsweise einem Filzmaterial, oder vorzugsweise einem nicht-fasrigen Material 130, wie es zuvor beschrieben wurde, auf.

## Patentansprüche

1. Ultraschallsensor zur Prüfung eines Wertdokuments (12) in einem Erfassungsbereich des Ultraschallsensors mittels Ultraschall einer vorgegebenen Frequenz mit
einem als Sender für den Ultraschall fungierenden Ultraschallwandler (100) und
einem als Empfänger für den Ultraschall fungierenden Ultraschallwandler (100),
wobei die Ultraschallwandler (100) so angeordnet sind, daß sie eine durch den Erfassungsbereich verlaufende Ultraschallstrecke (102) bilden, und
wobei wenigstens einer der Ultraschallwandler (100) einen relativ zu der Ultraschallstrecke (102) geneigten Oberflächenabschnitt (104) zur Abstrahlung von Ultraschall und/ oder zum Empfang von Ultraschall aufweist.

2. Ultraschallsensor nach Anspruch 1, bei dem der Oberflächenabschnitt (104) des wenigstens einen Ultraschallwandlers (100) rotationssymmetrisch um die Richtung der Ultraschallstrecke (102) ausgebildet ist.

3. Ultraschallsensor nach Anspruch 2, bei dem der Oberflächenabschnitt (104) kegelförmig oder kegelstumpfförmig ausgebildet ist.

4. Ultraschallsensor nach Anspruch 3, bei dem der Kegelöffnungswinkel des Oberflächenabschnitts (104) zwischen 160° und 176° liegt.

5. Ultraschallsensor nach einem der Ansprüche 1 bis 4, bei dem der Oberflächenabschnitt (104) einen maximalen Außendurchmesser aufweist, der zwischen der der Frequenz entsprechenden Wellenlänge in Luft und dem Zehnfachen der Wellenlänge liegt.

6. Ultraschallsensor nach einem der Ansprüche 1 bis 5, der wenigstens ein Transportelement (106) zur Führung des Wertdokuments in dem Erfassungsbereich aufweist, und bei dem die Ultraschallwandler so angeordnet sind, daß die Ultraschallstrecke (102) mit einer Normalen auf die Oberfläche des Wertdokument einen Winkel kleiner als 5° bildet.

7. Ultraschallsensor nach einem der Ansprüche 1 bis 6, bei dem auch der andere Ultraschallwandler (100) nach einem der Ansprüche 1-6 ausgebildet ist.

8. Ultraschallsensor nach einem der Ansprüche 1 bis 7, bei dem wenigstens ein den Erfassungsbereich begrenzendes Element (112) vorgesehen ist, das eine nicht-fasrige Oberflächenschicht aufweist, deren Impedanz kleiner ist als die einer an die Oberflächenschicht angrenzenden Innenschicht (114) des Elements.

9. Ultraschallsensor nach Anspruch 8, bei dem die Oberflächenschicht aus einem Material gebildet ist, dessen mittlere Dichte wenigstens 10% kleiner ist als die mittlere Dichte des Materials der Innenschicht.

10. Ultraschallsensor nach einem der Ansprüche 8 oder 9, bei dem die Dichte des Materials der Oberflächenschicht zwischen 0,3 g/cm³ und 0,8 g/cm³ liegt und/oder die Oberflächenschicht einen Verbundwerkstoff mit einem Volumenanteil an der Schicht von mehr als 80% umfaßt.

11. Ultraschallsensor nach einem der Ansprüche 8 bis 10, bei dem die Oberflächenschicht eine Dicke größer als ein Viertel der der vorgegebenen Frequenz entsprechenden Wellenlänge in der Oberflächenschicht und kleiner als 10 mm aufweist.

12. Ultraschallsensor nach einem der Ansprüche 8 bis 11, bei dem wenigstens in einem der Halter wenigstens ein Ultraschallkanal ausgebildet ist, in dem der jeweilige Ultraschallwandler (100) wenigstens teilweise angeordnet ist und/oder durch den Ultraschall von bzw. zu dem Ultraschallwandler (100) gelangen kann, wobei der Halter (108) wenigstens eine an wenigstens einen Abschnitt des Ultraschallkanals angrenzende, nicht-fasrige Oberflächenschicht aufweist, deren Impedanz kleiner ist als die einer zu der Oberflächenschicht benachbarten Innenschicht des Halters (108).

13. Ultraschallsensor nach einem der Ansprüche 1 bis 12, bei dem je einem Halterabschnitt (120, 122) für den Sender und den Empfänger, die jeweils miteinander fluchtende Ultraschallkanäle aufweisen, in denen der Sender bzw. der Empfänger vollständig versenkt so angeordnet sind, daß sie eine durch den Erfassungsbereich verlaufende Ultraschallstrecke bilden, und
wobei die Ultraschallwandler gegenüber einer Fluchtachse der Ultraschallkanäle geneigt angeordnet sind.

14. Ultraschallsensor zur Prüfung eines Wertdokuments (12) in einem Erfassungsbereich des Ultraschallsensors mittels Ultraschall einer vorgegebenen Frequenz mit
einem als Sender für den Ultraschall fungierenden Ultraschallwandler (118) und
einem als Empfänger für den Ultraschall fungierenden Ultraschallwandler (118),
je einem Halterabschnitt (220, 122) für den Sender und den Empfänger,
die jeweils miteinander fluchtende Ultraschallkanäle aufweisen, in denen der Sender bzw. der Empfänger (118) vollständig versenkt so angeordnet sind, daß sie eine durch den Erfassungsbereich verlaufende Ultraschallstrecke bilden, und
wobei die Ultraschallwandler (118) gegenüber einer Fluchtachse der Ultraschallkanäle geneigt angeordnet sind.

15. Wertdokumentbearbeitungsvorrichtung zur Bearbeitung von Wertdokumenten mit einem Ultraschallsensor nach einem der vorhergehenden Ansprüche.

## Claims

1. An ultrasonic sensor for checking a value document (12) in a detection area of the ultrasonic sensor by means of ultrasound of a predetermined frequency having an ultrasonic converter (100) acting as a transmitter for the ultrasound and
an ultrasonic converter (100) acting as a receiver for the ultrasound,
with the ultrasonic converters (100) being so disposed as to form an ultrasound path (102) extending through the detection area, and
with at least one of the ultrasonic converters (100) having a surface portion (104) inclined relative to the ultrasound path (102) for radiating ultrasound and/or receiving ultrasound.

2. The ultrasonic sensor according to claim 1, wherein the surface portion (104) of the at least one ultrasonic converter (100) is configured to be rotationally symmetric around the direction of the ultrasound path (102).

3. The ultrasonic sensor according to claim 2, wherein the surface portion (104) is of conical or frustoconical configuration.

4. The ultrasonic sensor according to claim 3, wherein the cone opening angle of the surface portion (104) is between 160° and 176°.

5. The ultrasonic sensor according to any of the claims 1 to 4, wherein the surface portion (104) has a maximum external diameter which is between the wavelength in air corresponding to the frequency and ten times the wavelength.

6. The ultrasonic sensor according to any of the claims 1 to 5, which has at least one transport element (106) for guiding the value document in the detection area, and wherein the ultrasonic converters are so disposed that the ultrasound path (102) forms an angle smaller than 5° with a normal to the surface of the value document.

7. The ultrasonic sensor according to any of the claims 1 to 6, wherein the other ultrasonic converter (100) is also configured according to any of the claims 1-6.

8. The ultrasonic sensor according to any of the claims 1 to 7, wherein at least one element (112) limiting the detection area is provided which has a non-fibrous surface layer whose impedance is smaller than that of an inside layer (114) of the element adjacent to the surface layer.

9. The ultrasonic sensor according to claim 8, wherein the surface layer is formed from a material whose average density is at least 10% smaller than the average density of the material of the inside layer.

10. The ultrasonic sensor according to any of the claims 8 or 9, wherein the density of the material of the surface layer is between 0.3 g/cm³ and 0.8 g/cm³ and/or the surface layer comprises a composite material with a volume proportion of the layer of over 80%.

11. The ultrasonic sensor according to any of the claims 8 to 10, wherein the surface layer has a thickness greater than one quarter of the wavelength in the surface layer corresponding to the predetermined frequency and smaller than 10 mm.

12. The ultrasonic sensor according to any of the claims 8 to 11, wherein there is formed at least in one of the holders at least one ultrasonic channel in which the respective ultrasonic converter (100) is disposed at least partly and/or through which ultrasound can pass from or to the ultrasonic converter (100), wherein the holder (108) has at least one non-fibrous surface layer adjacent to at least one portion of the ultrasonic channel, whose impedance is smaller than that of an inside layer of the holder (108) neighboring to the surface layer.

13. The ultrasonic sensor according to any of the claims 1 to 12, having a holder portion (120, 122) in each case for the transmitter and the receiver which have ultrasonic channels flush with each other in each case in which the transmitter and the receiver are so disposed in completely countersunk fashion as to form an ultrasound path extending through the detection area, and
wherein the ultrasonic converters are disposed so as to be inclined to an axis of alignment of the ultrasonic channels.

14. An ultrasonic sensor for checking a value document (12) in a detection area of the ultrasonic sensor by means of ultrasound of a predetermined frequency having an ultrasonic converter (118) acting as a transmitter for the ultrasound and
an ultrasonic converter (118) acting as a receiver for the ultrasound,
a holder portion (120, 122) in each case for the transmitter and the receiver which have ultrasonic channels flush with each other in each case in which the transmitter and the receiver (118) are so disposed in completely countersunk fashion as to form an ultrasound path extending through the detection area, and
wherein the ultrasonic converters (118) are disposed so as to be inclined to an axis of alignment of the ultrasonic channels.

15. A value document processing apparatus for processing value documents having an ultrasonic sensor according to any of the preceding claims.

## Revendications

1. Capteur ultrasonique destiné à l'examen d'un document de valeur (12) dans une zone de détection du capteur ultrasonique au moyen d'ultrason d'une fréquence prédéterminée, comportant
un transducteur ultrasonique (100) servant d'émetteur pour l'ultrason et
un transducteur ultrasonique (100) servant de récepteur pour l'ultrason,
les transducteurs ultrasoniques (100) étant agencés de telle façon qu'ils constituent un trajet ultrasonore (102) évoluant à travers la zone de détection,
et
au moins un des transducteurs ultrasoniques (100) comportant une partie de surface (104) inclinée par rapport au trajet ultrasonore (102) pour l'émission d'ultrason et/ou pour la réception d'ultrason.

2. Capteur ultrasonique selon la revendication 1, dans lequel la partie de surface (104) du au moins un transducteur ultrasonique (100) présente une symétrie de révolution autour du sens du trajet ultrasonore (102).

3. Capteur ultrasonique selon la revendication 2, dans lequel la partie de surface (104) est conique ou tronconique.

4. Capteur ultrasonique selon la revendication 3, dans lequel l'angle d'ouverture de cône de la partie de surface (104) se situe entre 160° et 176°.

5. Capteur ultrasonique selon une des revendications de 1 à 4, dans lequel la partie de surface (104) présente un diamètre extérieur maximum qui se situe entre la longueur d'onde dans l'air correspondant à la fréquence et le décuple de la longueur d'onde.

6. Capteur ultrasonique selon une des revendications de 1 à 5, qui comporte au moins un élément de transport (106) pour le guidage du document de valeur dans la zone de détection, et dans lequel les capteurs ultrasoniques sont agencés de telle façon que le trajet ultrasonore (102) constitue avec une normale sur la surface du document de valeur un angle inférieur à 5°.

7. Capteur ultrasonique selon une des revendications de 1 à 6, dans lequel aussi l'autre capteur ultrasonique (100) est réalisé selon une des revendications de 1-6.

8. Capteur ultrasonique selon une des revendications de 1 à 7, dans lequel au moins un élément (112) délimitant la zone de détection est prévu, qui présente une couche de surface non fibreuse dont l'impédance est inférieure à celle d'une couche intérieure (114) de l'élément contiguë à la couche de surface.

9. Capteur ultrasonique selon la revendication 8, dans lequel la couche de surface est constituée par un matériau dont la densité moyenne est au moins inférieure de 10% à la densité moyenne du matériau de la couche intérieure.

10. Capteur ultrasonique selon une des revendications 8 ou 9, dans lequel la densité du matériau de la couche de surface se situe entre 0,3 g/cm³ et 0,8 g/cm³ et/ou la couche de surface comprend un matériau composite dont la proportion volumique dans la couche est supérieure à 80%.

11. Capteur ultrasonique selon une des revendications de 8 à 10, dans lequel la couche de surface présente une épaisseur supérieure à un quart de la longueur d'onde correspondant à la fréquence prédéterminée dans la couche de surface et inférieure à 10 mm.

12. Capteur ultrasonique selon une des revendications de 8 à 11, dans lequel, au moins dans un des supports, au moins un canal ultrasonique est réalisé, dans lequel le capteur ultrasonique respectif (100) est au moins partiellement agencé et/ou à travers lequel de l'ultrason peut arriver du ou au capteur ultrasonique (100), le support (108) présentant au moins une couche de surface non fibreuse qui est contiguë à au moins une partie du canal ultrasonique et qui possède une impédance inférieure à celle d'une couche intérieure du support (108) avoisinante à la couche de surface.

13. Capteur ultrasonique selon une des revendications de 1 à 12, comportant respectivement une partie de support (120, 122) pour l'émetteur et pour le récepteur, qui présentent respectivement des canaux ultrasoniques alignés entre eux dans lesquels l'émetteur ou le récepteur sont entièrement enfouis de telle manière qu'ils constituent un trajet ultrasonore évoluant à travers la zone de détection,
et
les capteurs ultrasoniques étant agencés de façon inclinée par rapport à un axe d'alignement des capteurs ultrasoniques.

14. Capteur ultrasonique destiné à l'examen d'un document de valeur (12) dans une zone de détection du capteur ultrasonique au moyen d'ultrason d'une fréquence prédéterminée, comportant
un transducteur ultrasonique (118) servant d'émetteur pour l'ultrason et
un transducteur ultrasonique (118) servant de récepteur pour l'ultrason, respectivement une partie de support (120, 122) pour l'émetteur et pour le récepteur, qui présentent respectivement des canaux ultrasoniques alignés entre eux dans lesquels l'émetteur ou le récepteur (118) sont entièrement enfouis de telle manière qu'ils constituent un trajet ultrasonore évoluant à travers la zone de détection, et
les capteurs ultrasoniques (118) étant agencés de façon inclinée par rapport à un axe d'alignement des capteurs ultrasoniques.

15. Dispositif de traitement de documents de valeur pour le traitement de documents de valeur avec un capteur ultrasonique selon une des revendications précédentes.
